# EUROPEAN PATENT SPECIFICATION

(11) **EP 1 845 687 B1**
(45) Date of publication and mention of the grant of the patent: **06.09.2017**
(21) Application number: 06761359.6
(22) Date of filing: 05.07.2006
(51) Int. Cl.: H04L 29/06

(54) **A METHOD FOR IP-BASED SERVICE TRANSMISSION**
VERFAHREN ZUR I-BASIERTEN DIENSTE-ÜBERMITTLUNG
PROCÉDÉ POUR LA TRANSMISSION DE SERVICE BASÉ SUR IP

(30) Priority: 26.08.2005 CN 200510029133
(43) Date of publication of application: 17.10.2007
(73) Proprietor: Huawei Technologies Co., Ltd., Longgang District Shenzhen, Guangdong 518129 (CN)
(72) Inventor: XIA, Muqiang, Guangdong 518129 (CN)
(74) Representative: Körber, Martin Hans
(86) International application number: PCT/CN2006/001572
(87) International publication number: WO 2007/022681

(56) References cited:
- EP-A- 1 388 998
- WO-A-2005/053232
- CN-A- 1 622 581
- JP-A- 2002 359 651
- US-A1- 2004 264 482
- US-A1- 2005 091 392
- TOM TAYLOR: "Megaco/H.248: A New Standard for Media Gateway Control" IEEE COMMUNICATIONS MAGAZINE, IEEE SERVICE CENTER, PISCATAWAY, US, vol. 38, no. 10, 1 October 2000 (2000-10-01), pages 124-132, XP011091369 ISSN: 0163-6804
- MCGOOGAN J R ET AL: "EVOLUTION OF SWITCHING ARCHITECTURE TO SUPPORT VOICE TELEPHONY OVER ATM", BELL LABS TECHNICAL JOURNAL, WILEY, CA, US, vol. 5, no. 2, 1 April 2000 (2000-04-01), pages 157-168, XP000959128, ISSN: 1089-7089, DOI: 10.1002/BLTJ.2228

## Description

### Field of the Invention

The present invention relates to a method for service transport, and more particularly, to a method for Internet Protocol-based (IP-based) service transport.

### Background of the Invention

As enormous progress has been made in communication technologies, people present increasingly higher expectations and demands on personal communications. Accordingly, mobile operators must focus on those aspects with direct influence upon the effect of using a mobile service by a user, such as user interfaces, Quality of Service, etc. Those features of the 3rd Generation (3G) mobile communication systems, such as a high bandwidth, multiple services, a high quality, etc., have greatly interested the mobile consumption market. However, some problems still exist in the 3G technologies. If not solved, these problems would restrict extension of the market to a certain extent, and also affect development of the business of the mobile operators.

In a future 3G network architecture, a mobile network will gradually evolve into a packet Internet Protocol (IP) network, but no longer be limited to the circuit switched mode. Additionally, as the development of traditional communication networks, Internet and mobile communication networks, network integration becomes an inevitable trend. A Next Generation Network (NGN) is such a new generation of network among others, in which an IP packet switched network is taken as a core network, control is separated from bearer, various access technologies coexist, and various existing networks are integrated, and thus can satisfy the demands for future wideband multimedia communications.

The NGN has stepped to a packet switched-based network from a traditional circuit switched-based Public Switched Telephone Network (PSTN). The NGN bears all services of the original PSTN network, shifts a large amount of data transport into an IP network to reduce the load of the PSTN network, and brings new services and enhances old services by using new features of IP technologies. The NGN comes as a result of the integration of a Time Division Multiplex-based PSTN voice network, an Integrated Services Digital Network (ISDN), an IP-based packet network, a mobile communication network, etc., and brings possibility to enable integrated services, including voice, video, data, etc., over the new generation of networks.

The NGN as specified by the International Telecommunication Union Telecommunication Standardization Sector (ITU-T) is a packet-based network, which is able to provide services including Telecommunication Services and make use of multiple broadband and Quality of Service (QoS)-enabled transport technologies. In the NGN, service-related functions are independent from underlying transport-related technologies. It provides users with unrestricted access to different service providers. It supports generalized mobility which will allow consistent and ubiquitous provision of services to users.

In mobile domain, a traditional Mobile Switching Center (MSC) is mainly based on Time Division Multiplex (TDM) bearers. A TDM bearer has a fixed bandwidth of 64Kbit/s, and can transfer services of voice, data and facsimile. With the evolution of NGN, the bearer gradually evolves from a traditional TDM bearer to an IP bearer. Also, the MSC is divided into a Media Gateway (MGW) and a Media Gateway Controller (MGC) due to the introduction of a mechanism of separating bearer from control.

Service transport based upon an IP bearer may use various code schemes, such as G.729 and G.711 of ITU-T, etc. G.729 provides a data rate of 8Kbit/s, and can transfer Voice over IP (VoIP) services, but can not transfer data and facsimile services. G.711 provides a data rate of 64Kbit/s, and theoretically can transfer data and facsimile services. However, G.711 may not transfer data and facsimile services properly if any packet loss occurs due to unreliability of IP transport.

Additionally, the codec scheme G.711 Redundant (G.711Red) for transferring voice, facsimile and data services is not only applicable to IP networks, but also highly reliable due to the introduction of a redundant mechanism. Also the Real-time Facsimile protocol T.38 dedicated for high-speed transport of a facsimile service provides even higher efficiency than G711Red. Therefore, it is T.38 generally to be adopted in transport of high-speed facsimile or Modulation & Demodulation (Modem) services.

It is necessary to determine accurately the type of a service and to select an appropriate codec scheme for transport of the service, as there are more and more types of IP-based services. If the type of the service can not be determined accurately, then the selected codec scheme may not well satisfy the transport of the service, and even may not enable proper transport of the service. Consequently, a technical challenge arises for determination of the service type according to call signaling and further timely selection of an appropriate codec scheme.

In existing solutions, generally, a bearing mode or codec scheme capable of simultaneously supporting voice, data and facsimile will be used to set up a transport channel before a call is set up. For instance, transport of various voice and facsimile services can be enabled by using G.711/G.71 IRed codec scheme over a TDM or IP bearer.

Additionally, in another case, the type of a service is determined according to the signaling prior to setting up of a call, for example, it may be determined whether the service is a facsimile or data service. If it is determined the service type is a facsimile or data service, G.711/G.711Red codec scheme is used for transferring the facsimile or data service; otherwise, G.729 is used for transferring a voice service.

Both of the above solutions are easy and convenient to be implemented. However, both of them have poor utilization rate of network bandwidth and limited reliability of service transport, due to inaccurate determination of service type or unreasonable selection of codec scheme for the service type.

In practical applications, the above solutions have limitations. For the traditional TDM bearing mode, the solution has both a high cost and a low flexibility of networking, and thus does not conform to the evolution of NGN. For the IP bearing mode, IP transport bandwidth may be wasted if the common G.711/G.711Red codec is used directly despite the type of a service, because the main services of the MSC are voice services and it is sufficient to use G.729 code for transferring ordinary voice service. It is not necessary to transfer voice services with G.711/G.711Red due to facsimile and data services.

In the second solution, the determination of a service as a facsimile or data service according to signaling before setting up a call may not be accurate. Since a lot of service-related signaling does not emerge till in the call process, the type of a service may not be determined accurately by the signaling exchange prior to setting up of a call. For instance, a call initiated by a facsimile machine upon access to a fixed network is identical to an ordinary PSTN call in terms of signaling, resulting in an impossible determination. Moreover, a service of NGN may use a facsimile service after a voice service has been set up, which will cause the determination based upon signaling inaccurate. These situations will result in a serious waste of IP bandwidth or failures in setting up a fax or data service due to an insufficient bandwidth. For instance, if a codec not supporting facsimile is selected due to a wrong determination, a failure will occur in the subsequent facsimile service, thus seriously affecting the Quality of Service.

The main reason resulting in the above situation lies in that the type of a service can not be determined accurately only from the signaling prior to setting up of a call, and thus an appropriate codec scheme can not be selected for transport, thereby resulting in a waste of bandwidth or a failure in service transport.

PCT patent application WO2005/053232A discloses a method of performing fax in the next generation network. In the method, a media gateway controller sends in parallel a command of modifying encode and decode to the communicating media gateways at both ends.

EP patent application EP1388998A1 discloses a transmission method. The transmission method has modulated carrier signals transmitted between network subscribers of a packet-oriented communications network, using a network link established between media gateway network nodes associated with each of the subscribers.

### Summary of the Invention

In view of this, the present invention provides a method for Internet Protocol-based service transport, so that services of voice, facsimile, data, etc. may be set up and transferred successfully over an IP bearer while saving transport bandwidth as much as possible.

To achieve the object, the invention provides an IP-based service transport method, including:
negotiating and determining, by a calling media gateway controller and a called media gateway controller, a codec scheme supported by both calling and called parties through a transport independent call control protocol, wherein the codec scheme is a codec scheme of G.711 Redundant or T.38;
during a call process, initiating by the calling media gateway controller and a called media gateway controller requests for detecting a service to their respective media gateways;
upon detection of characteristic signaling of the service, reporting by the calling or called media gateway the characteristic signaling to the media gateway controller of the calling or called media gateway,
determining by the media gateway controller the type of the service according to the characteristic signaling,
switching by the media gateway controller of the calling or called media gateway a codec scheme of the calling or called media gateway to the codec scheme corresponding to the type of the service;
sending by the media gateway controller of the calling or called media gateway an application transport message of bearer independent call control protocol to the other media gateway controller to notify the other media gateway controller to switch to the codec scheme corresponding to the type of the service;
switching by the other media gateway controller a codec scheme of the media gateway corresponding to the other media gateway controller to the codec scheme corresponding to the type of the service; and
performing by the media gateways a corresponding type of service transport by using the switched codec scheme.

Optionally, in the step of initiating requests for detecting a service, the media gateway controllers initiate the requests for detecting a service by sending a Modify message to the media gateways.

Optionally, the step of reporting the characteristic signaling, determining the type of the service, sending the application transport message and switching codec schemes of the calling media gateway and the called media gateway includes:
upon detection of characteristic signaling of a low-speed service, reporting by the calling or called media gateway the characteristic signaling to the media gateway controller corresponding to the calling or called media gateway;
determining by the media gateway controller a codec scheme of G.711 Redundant or T.38 required to be switched to,
switching by the media gateway controller of the calling or called media gateway the codec scheme of the calling or called media gateway to the codec scheme of G.711 Redundant or T.38 through a signaling exchange between the media gateway controller and the calling or called media gateway;
sending, by the media gateway controller of the calling or called media gateway, the application transport message to the other media gateway controller to notify the other media gateway controller to switch to the determined codec scheme; and
switching, by the other media gateway controller, the codec scheme of the media gateway corresponding to the other media gateway controller to the codec scheme of G.711 Redundant or T.38 through a signaling exchange between the other media gateway controller and the media gateway corresponding to the other media gateway controller.

Optionally, the low-speed service is an ordinary facsimile service, and both the calling and called media gateways support the G.711 Redundant codec scheme, and wherein the step of reporting the characteristic signaling upon detection of characteristic signaling of the low-speed service, the step of sending the application transport message and the step of determining the codec scheme and switching the codec schemes of the calling and called media gateways respectively to a codec scheme of G.711 Redundant or T.38 include:
upon detection of the characteristic signaling of the ordinary facsimile service, reporting by the calling or called media gateway the characteristic signaling to the media gateway controller corresponding to the calling or called media gateway;
determining by the media gateway controller that it is required to switch to the G711 Redundant codec scheme after determining that the characteristic signaling includes signaling V21;
modifying by the media gateway controller the codec scheme of the media gateway corresponding to the media gateway controller to the G.711 Redundant codec scheme;
sending by the media gateway controller the application transport message to the other media gateway controller to notify the other media gateway controller that it is required to switch to the G711 Redundant codec scheme; and
modifying by the other media gateway controller the codec scheme of the media gateway corresponding to the other media gateway controller to the G711 Redundant codec scheme.

Optionally, the low-speed service is an ordinary modem service, both the calling and called media gateways support the G.711 Redundant codec scheme, and the step of reporting the characteristic signaling upon detection of characteristic signaling of the low-speed service, the step of determining the codec scheme, the step of sending the application transport message and the step of switching the codec schemes of the calling and called media gateways respectively to a codec scheme of G.711 Redundant or T.38 include:
upon detection of the characteristic signaling of the ordinary modem service, reporting by the calling or called media gateway the characteristic signaling to the media gateway controller corresponding to the calling or called media gateway;
determining by the media gateway controller that it is required to switch to the G.711 Redundant codec scheme after determining that the characteristic signaling includes signaling /ANS, /ANSam or ANSam;
modifying by the media gateway controller a codec scheme of the media gateway corresponding to the media gateway controller to the G711 Redundant codec scheme;
sending by the media gateway controller the application transport message to the other media gateway controller to notify the other media gateway controller that it is required to switch to the G.711 Redundant codec scheme; and
modifying by the other media gateway controller the codec scheme of the media gateway corresponding to the other media gateway controller to the G711 Redundant codec scheme.

Optionally, the low-speed service is an ordinary facsimile service, both the calling and called media gateways support the T.38 codec scheme, and the step of reporting the characteristic signaling upon detection of characteristic signaling of the low-speed service, the step of determining the codec scheme, the step of sending the application transport message and the switching the codec schemes of the calling and called media gateways respectively to a codec scheme of G711 Redundant or T.38 include:
upon detection of the characteristic signaling of the ordinary facsimile service, reporting by the calling or called media gateway the characteristic signaling to the media gateway controller corresponding to the calling or called media gateway;
determining by the media gateway controller that it is required to switch to the T.38 codec scheme after determining that the characteristic signaling includes signaling V21;
modifying by the media gateway controller the codec scheme of the media gateway corresponding to the media gateway controller to the T.38 codec scheme;
sending by the media gateway controller the application transport message to the other media gateway controller to notify the other media gateway controller that it is required to switch to the T.38 codec scheme; and
modifying by the other media gateway controller (MGC2) the codec scheme of the media gateway corresponding to the other media gateway controller to the T.38 Redundant codec scheme.

Optionally, the steps of reporting the characteristic signaling, determining the type of the service, sending the application transport message and switching codec schemes of the calling media gateway and the called media gateway includes:
upon detection of characteristic signaling of a high-speed service, reporting by the calling or called media gateway the characteristic signaling to the media gateway controller corresponding to the calling or called media gateway;
determining by the media gateway controller a codec scheme required to be switched to;
switching by the media gateway controller of the calling or called media gateway the codec scheme of the calling or called media gateway to the codec scheme of T.38 through a signaling exchange between the media gateway controller and the calling or called media gateway;
sending by the media gateway controller of the calling or called media gateway the application transport message to the other media gateway controller to notify the other media gateway controller to switch to the determined codec scheme; and
switching by the other media gateway controller the codec scheme of the media gateway corresponding to the other media gateway controller to the codec scheme of T.38 through a signaling exchange between the other media gateway controller and the media gateway corresponding to the other media gateway controller.

Optionally, the high-speed service is a high-speed facsimile service, both the calling and called media gateways support the codec schemes of G.711 Redundant and T.38, and the step of reporting the characteristic signaling upon detection of characteristic signaling of a high-speed service, the step of determining the codec scheme, the step of sending the application transport message and the step of switching the codec schemes of the calling and called media gateways respectively to a codec scheme of T.38 include:
upon detection of the characteristic signaling of the high-speed facsimile service, reporting by the calling or called media gateway the characteristic signaling to the media gateway controller corresponding to the calling or called media gateway;
determining by the media gateway controller that it is required to switch to the G.711 Redundant codec scheme after determining that the characteristic signaling includes signaling /ANSam or ANSam;
modifying by the media gateway controller the codec scheme of the media gateway corresponding to the media gateway controller to the G.711 Redundant codec scheme;
sending by the media gateway controller the application transport message to the other media gateway controller to notify the other media gateway controller that it is required to switch to the G.711 Redundant codec scheme;
modifying by the other media gateway controller the codec scheme of the media gateway corresponding to the other media gateway controller to the G.711 Redundant codec scheme; and
setting up a facsimile service channel with the G711 Redundant codec scheme between the calling and called media gateways;
upon detection of signaling of V21 or CM facsimile, reporting by the calling or called media gateway the signaling to the media gateway controller corresponding to the calling or called media gateway;
determining by the media gateway controller that it is required to switch to the T.38 codec scheme according to the received signaling;
modifying by the media gateway controller the codec scheme of the media gateway corresponding to the media gateway controller to the T.38 codec scheme;
sending by the media gateway controller the application transport message to the other media gateway controller to notify the other media gateway controller that it is required to switch to the T.38 codec scheme; and
modifying by the other media gateway controller the codec scheme of the media gateway corresponding to the other media gateway controller to the T.38 codec scheme.

Optionally, the high-speed service is a high-speed modem service, both the calling and called media gateways support the codec schemes of G711 Redundant and T.38, and the step of reporting the characteristic signaling upon detection of characteristic signaling of a high-speed service, the step of sending the application transport message, the step of determining the codec scheme and the step of switching the codec schemes of the calling and called media gateways respectively to a codec scheme of T.38 include:
upon detection of the characteristic signaling of the high-speed modem service, reporting by the calling or called media gateway the characteristic signaling to the media gateway controller corresponding to the calling or called media gateway;
determining by the media gateway controller that it is required to switch to the G.711 Redundant codec scheme after determining that the characteristic signaling includes signaling /ANSam or ANSam;
modifying by the media gateway controller the codec scheme of the media gateway corresponding to the media gateway controller to the G.711 Redundant codec scheme;
sending by the media gateway controller the application transport message to the other media gateway controller to notify the other media gateway controller that it is required to switch to the G711 Redundant codec scheme;
modifying by the other media gateway controller the codec scheme of the media gateway corresponding to the other media gateway controller to the G.711 Redundant codec scheme; and
setting up a modem pass-through channel with the G.711 Redundant codec scheme between the calling and called media gateways;
upon detection of signaling of CM modem, reporting by the calling or called media gateway the signaling to the media gateway controller corresponding to the calling or called media gateway;
determining by the media gateway controller that it is required to switch to the T.38 codec scheme according to the received signaling;
modifying by the media gateway controller the codec scheme of the media gateway corresponding to the media gateway controller to the T.38 codec scheme;
sending by the media gateway controller the application transport message to the other media gateway controller to notify the other media gateway controller that it is required to switch to the T.38 codec scheme; and
modifying by the other media gateway controller a codec scheme of the media gateway corresponding to the other media gateway controller to the T.38 codec scheme.

Optionally, after the step of performing the corresponding type of service transport, the method further includes:
detecting by the calling or called media gateway a termination of the service transport, and reporting characteristic signaling of facsimile termination to the media gateway controller corresponding to the calling or called media gateway;
determining by the media gateway controller that it is required to switch currently back to the original codec scheme according to the characteristic signaling of facsimile termination;
modifying by the media gateway controller the codec scheme of the media gateway corresponding to the media gateway controller to the original codec scheme; and sending by the media gateway controller an application transport message to the other media gateway controller to notify the other media gateway controller that it is required to switch to the original codec scheme, and modifying by the other media gateway controller the codec scheme of the other media gateway corresponding to the other media gateway controller to the original codec scheme.

Optionally,
upon detection of the characteristic signaling of the service, transferring, by the calling media gateway or the called media gateway, the characteristic signaling of the service in a bearing plane with lossless transport, or transferring the characteristic signaling of the service out of band in an extension way.

Optionally, before the step of initiating requests for detecting a service, the method further includes:
negotiating and determining by the calling media gateway controller and the called media gateway controller a codec scheme supported by both calling and called parties.

Optionally, the negotiating and determining of the codec scheme supported by both the calling and called parties includes:
sending by the calling media gateway controller the codec schemes supported by the calling party to the called media gateway controller;
selecting by the called media gateway controller from the codec schemes supported by the calling party a codec scheme supported by the called party, and returning the codec scheme to the calling media gateway controller as the codec scheme supported by both the calling and called parties.

Optionally, the reporting of the characteristic signaling to the corresponding media gateway controller includes:
reporting the characteristic signaling to the media gateway controller through a Notify message.

Optionally, the modifying by the media gateway controller a codec scheme of the media gateway corresponding to the media gateway controller includes:
sending by the media gateway controller to the media gateway a Modify message, carrying the codec scheme required to be switched to, and upon receipt of the Modify message, modifying, by the media gateway, its codec scheme to the codec scheme carried in the Modify message.

Compared with the solutions in the prior art, it may be seen that the inventive technical solutions is different mainly in that, the calling and called parties negotiate the type of a service and a corresponding codec scheme before a call is set up, and after the call is set up normally, during the call, the MGW keeps detecting and reporting service-related signaling to the MGC, and the MGC determines the type of the service and switches to the corresponding codec scheme.

For a facsimile or Modem service, it may be determined from characteristic signaling whether the service is a high-speed facsimile or a Modem service. In the case that G.711 Red capable of bearing voice, facsimile and data is used, T.38 codec scheme may be switched to upon determination of the high-speed facsimile or Modem service.

The type of a service may be determined from in-band characteristic signaling of V21, CM, etc.

For the T.38 codec capable of bearing only facsimile and Modem services, the original codec scheme may be switched back to upon a termination of the facsimile or Modem service, to support a restore of the voice call.

An evident advantageous effect resulted from the difference in the technical solutions lies in that, the in-band detection and reporting of the service-related signaling may ensure an accurate determination of the type of a service and further a selection of an appropriate codec scheme, that is, a successful transport of the service may be ensured without bandwidth waste, and performance of the system and Quality of Service may be further improved.

Respective transport of ordinary or high-speed facsimile, data and Modem services through the codec scheme of G.711Red, T.38, etc. may better improve the Quality of Service of a high-speed service.

The switching-back mechanism of T.38 codec method upon a termination of a facsimile service may ensure no interruption of the voice and facsimile services during a call due to the switching, and hence continuity of the services.

### Brief Descriptions of the Drawings

Fig.1 is a schematic diagram illustrating networking for IP-borne service transport.
Fig.2 is a flow chart illustrating a signaling exchange for codec scheme negotiation between a calling party and a called party according to a first embodiment of the invention.
Fig.3 is a flow chart illustrating a signaling exchange for ordinary facsimile service transport through G.711Red according to a second embodiment of the invention.
Fig.4 is a flow chart illustrating a signaling exchange for ordinary facsimile service transport through T.38 according to the second embodiment of the invention.
Fig.5 is a flow chart illustrating a signaling exchange for high-speed facsimile service transport according to a third embodiment of the invention.
Fig.6 is a flow chart illustrating a signaling exchange for MODEM service transport according to a fourth embodiment of the invention.

### Detailed Descriptions of the Embodiments

The invention will be further described in detail with reference to the accompanying drawings, to make the objects, technical solutions and advantages of the invention more apparent.

The invention proposes an IP-based service transport solution using various codec schemes (G729, G711, G.711Red, T.38, etc.) to transfer services of voice (VoIP), facsimile (Fax), data, Modem, etc. The type of a service is determined from in-band call signaling after a call is set up with a voice channel. A codec scheme with a larger bandwidth is required to be switched to for services of facsimile, data, etc., and a codec scheme with a higher efficiency is required to be used for a high-speed facsimile service. The type of a service may be determined accurately due to the detection of the in-band call signaling. Finally, various services may be transferred efficiently with an IP bearer enabling more flexible networking.

In IP-based service transport, transport between a calling MGW and a called MGW is borne over IP. The service transport is roughly divided into three steps, i.e., negotiation, detection and switching. That is, a calling party and a called party negotiate an alternative codec scheme corresponding to a service type, then the MGWs detect characteristic signaling associated with the service from in-band signaling, and report a detection result to MGCs, and the MGCs determine the type of the service and ultimately perform control operations of switching and configuring the codec scheme.

Technical implementations of the invention will be described in detail hereinafter by way of embodiments in specific applications.

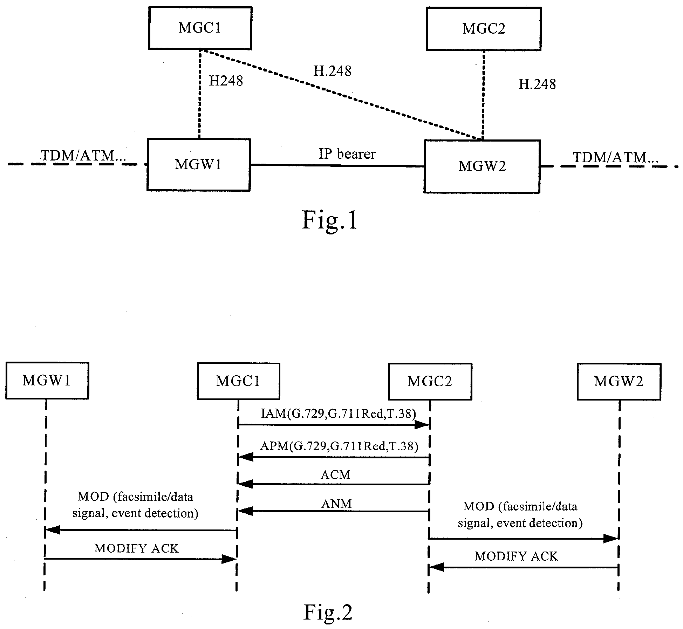

IP bearer includes the case that an inter-office bearer is an IP bear, in other words, a calling MGC (MGC1) controls a calling MGW (MGW1) and a called MGC (MGC2) controls a called MGW (MGW2) through the H.248 protocol respectively. IP bearer also includes the case that a bearer across MGWs is an IP bearer, in other words, the MGC1 simultaneously controls the MGW1 and the MGW2. Networking for these two cases is illustrated in Fig.1, in which the MGWs at both sides are endpoints where TDM and IP are connected or endpoints where Asynchronous Transfer Mode (ATM) and IP are connected. Provision of data and facsimile service functions based upon an IP bearer needs to be enabled through the MGC and the MGW together. The IP-borne ordinary voice code, such as G.729, Adaptive Multi-Rate (AMR), etc., does not support a facsimile service, and thereby needs to be switched to a code type supporting facsimile and data, such as G.711Red and T.38 Code, upon detection of a facsimile event.

According to the invention, an out-band negotiation of a codec is made prior to the setting up of a call through a Transport Independent Call Control (TICC) protocol, such as the Bearer Independent Call Control (BICC) protocol and the Session Initiation Protocol (SIP). After a call answer is successful, if the G.711Red or T.38 code, etc. is supported, the MGC sends at the IP endpoint to the MGW a facsimile data signal and a request for in-band detection of a facsimile event. Upon the detection of the signal and the request, the MGW reports a detection result to the MGC. The MGC modifies the voice code of the IP endpoint to a code capable of transferring facsimile data, such as G.711Red, T.38, etc., through a codec modification process, thereby achieving the data facsimile function.

As described above, the inventive IP-based service transport method includes three steps: the calling party and the called party negotiate and configure a codec scheme for transport of a service; during the call process, the calling MGW or the called MGW detects service-related signaling and reports to the calling MGC or the called MGC, respectively; and subsequently, the calling MGC or the called MGC determines the type of the service according to the reported service-related signaling, and notifies of the corresponding codec scheme and controls a switching to the corresponding codec scheme. A signaling exchange flow for performing each of the steps according to a first embodiment of the invention will be presented hereinafter.

During the alternative codec scheme negotiation between the calling party and the called party, a signaling exchange flow for the codec negotiation and event detection request is as illustrated in Fig.2.

First the MGC1 sends an Initial Address Message (IAM) to the MGC2 to perform a Code & Decode (CODEC) out-band negotiation. The IAM carries codec schemes supported by the calling side, i.e. the MGC1 side, such as G.729, G.711Red, T.38, etc. Upon the receipt of the message, the MGC2 determines which codecs are supported locally, and returns those codecs. Thus, both the sides determine a codec scheme through the determination. The MGC2 returns to the MGC1 an Application Transport Message (APM) carrying the determined codec scheme after the negotiation.

Next, the MGC2 returns an Address Complete Message (ACM) and an Answer Message (ANM) to the MGC 1.

Then, the calling MSC initiates a data/facsimile signal and a request for detection of a facsimile event at the TDM endpoint. The MGC1 sends a Modify message to the MGW1, initiating a request for detection of service-related signaling, and the MGW1 returns a Modify response message. On the opposite side, the MGC2 sends a Modify message to the MGW2, initiating a request for detection of service-related signaling, and the MGW2 returns a Modifying response message. Here, the request for detection instructs the MGW to detect in-band service-related signaling, such as V21, CM (Fax) for Fax service, etc., and to notify the MGC of a detected event.

During the detecting, upon detection of service-related signaling, the MGW1 or MGW2 sends respectively to the MGC1 or MGC2 a Notify message notifying of a detected event of service-related signaling, and the MGC1 or MGC2 returns a Notify response message.

Then, the MGC determines the service type and controls the codec switching. A specific signaling exchange process is illustrated as below.

One of the MGC1 and MGC2 determines the service type according to characteristic signaling upon receipt of a detected event of service-related signaling.

Then, the one MGC sends a Modify message to the MGW corresponding to the one MGC, controlling the MGW to switch to a corresponding codec scheme, and receives a response message from the MGW. The Modify message carries parameters such as the codec scheme to be switched to, etc.

Also, the one MGC sends an APM message to the other MGC, instructing the other MGC to switch its codec scheme.

Upon receipt of the instruction, the other MGC sends a Modify message to the MGW corresponding to the other MGC, also controlling the MGW to switch to a corresponding codec scheme, and receives a response message returned from the MGW.

When the switching is completed, the instructed MGC returns an APM response message.

After the MGC initiates the in-band detection request to the MGW, the MGC performs a processing respectively for different services according to the signal reported from the MGW. Here ordinary Fax, high-speed Fax and Modem data services may be supported. Several specific embodiments and signaling exchange procedures of the embodiments will be described hereinafter depending on different service types, different rate requirements and different used codec schemes. Service types involved in the invention mainly include voice (VoIP), facsimile (Fax), data and MODEM. The facsimile and modem service types both may be divided into two types, high-speed and ordinary, and a high-speed service needs higher bandwidth and efficiency. The codecs which may be selected include G729, G.711Red and T.38. G.729 provides a small bandwidth capable of transferring only a voice service. G.711Red provides a bandwidth sufficient for transport of services such as facsimile, data, etc., and also sufficient for transport of a voice service but with a waste of the bandwidth and a low utilization rate of resources. T.38 may be used for transport of facsimile and data services but may not be used for transport of voice service. However, T.38 is of a high efficiency, and suitable for transport of a high-speed facsimile service.

In a second embodiment of the invention, signaling exchange flows for detection and switching will be illustrated with respect to an ordinary facsimile service. For an ordinary facsimile service, service-related signaling includes CNG, CED and V21, and codec schemes which may be used for transferring the ordinary facsimile service include G.711Red and T.38. Upon detection of CNG, CED or V21, the MGW1 reports the detected signaling to the MGC1. The MGC1 makes a determination, and only when the reported signaling is V21, the MGC1 controls the MGWs to switch to the codec scheme of G.711 Redundant or T.38.

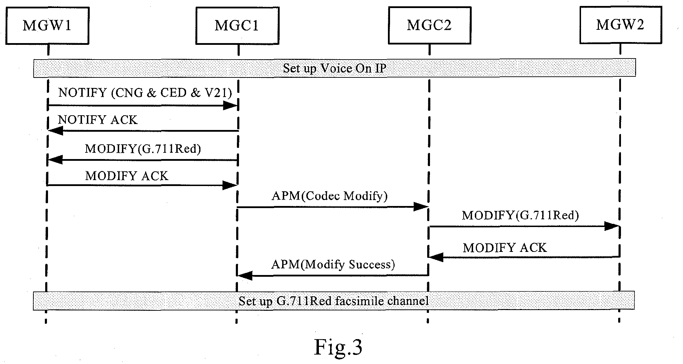

Fig.3 is a flow for an ordinary Fax pass-through service by way of an example of G.711Red. This flow is applicable to a case in which a negotiation result indicates that the MGWs on both sides support G.711Red.
(1) For an ordinary facsimile, after a voice channel is set up, the MGW1 reports signals of CNG, CED and V21. According to the signal V21, the MGC1 instructs the MGW to switch to a Fax channel. Although CNG and CED may not be taken by the MGC as the basis of the switching, they are still reported as a reference of service-related signaling.
(2) The MGC1 issues a Modify message for modifying the codec of the IP endpoint to G7711 Red.
(3) A G.711Red codec is carried to the opposite side through BICC, to ask the MGC2 to modify the codec to G.711Red.
(4) The MGC2 issues a Modify message for modifying a codec of the called IP endpoint to G.711 Red.
(5) The codec modification is completed, a response is returned, and a facsimile channel of G.711 Red is set up.

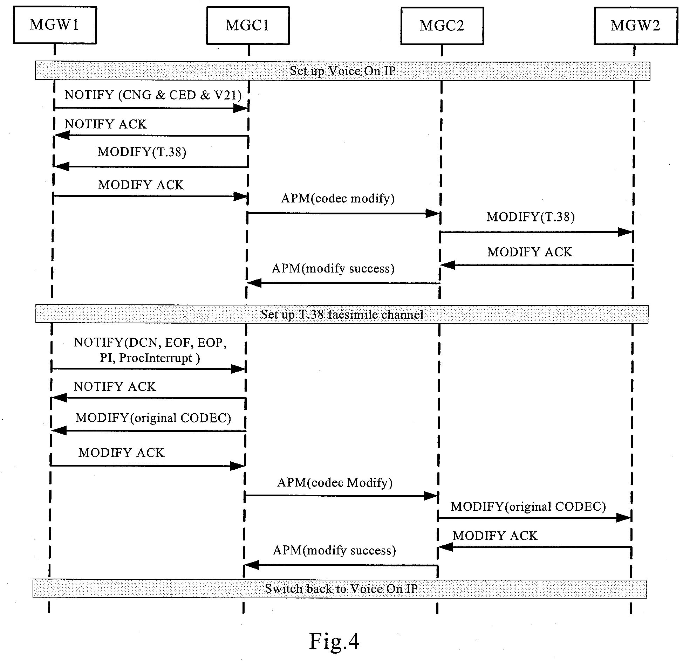

Fig.4 is a flow for an ordinary facsimile T.38 service by way of an example of T.38 codec. This flow is applicable to a case in which a negotiation result indicates that the MGWs on both sides support T.38. It shall be noted that different from G.711Red, after a facsimile is completed, the T.38 codec needs to be switched back to the original codec, because T.38 only supports Fax services. Therefore, after the facsimile service is completed, the original codec will be used for transferring a subsequent service such as voice or the like if any. G.711Red itself may be used to transfer data and facsimile as well as voice, and thus does not need to be switched back to the original codec.

Therefore, after it is determined that the service type is facsimile and thus the codec is switched to the T.38 codec scheme, the MGW1 detects and reports facsimile termination signaling to the MGC1. Upon determining that the reported signaling is any one of facsimile termination signaling, the MGC1 controls the MGWs to switch to the codec scheme that is prior to the switching to the T.38 codec scheme.

Fig.4 has its upper half flow similar to that in Fig.3, and its lower half is a flow for switching back from T.38 to the original codec.
(1) For an ordinary facsimile, after a voice channel is set up, the MGW reports signals of CNG, CED and V21. According to the signal V21, the MGC1 instructs the MGW to switch to a Fax pass-through channel.
(2) The MGC1 issues a Modify message for modifying the codec of the IP endpoint to T.38.
(3) T.38 is carried to the opposite side through BICC, to ask the MGC2 to modify the codec to T.38.
(4) The MGC2 issues a Modify message for modifying the codec of the called IP endpoint to T.38.
(5) The codec modification is completed, and a facsimile service transport channel is set up.
(6) The MGW1 reports Fax termination signaling. The Fax termination signaling may be EOP (0x0007) which means Procedures Complete, ProcInterrupt (0x0008) which means Procedure Interrupt Processing, EOF (0x0009) which means end of fax session/call terminating, PI (0x000A) which means Priority Interrupt, Switch to Voice and Disconnect (0x000B) which means Premature Disconnect.
(10) The MGC1 issues a Modify message for modifying the codec to a codec used originally for communication.
(11) The codec used originally for communication is carried to the opposite side through BICC, to ask the MGC2 to modify the original codec.
(12) The MGC2 issues a Modify message for modifying the codec of the called IP endpoint to the original codec.
(13) The codec modification is completed, and the original codec channel is restored.

Some MGWs may not support the switching back from T.38 to the original codec after a facsimile is over. In this case, the switching-back procedure will fail, and the call will be terminated automatically

In a third embodiment of the invention, signaling exchange flows for detection and switching will be illustrated with respect to a high-speed facsimile service. For a high-speed facsimile service, the service transport is divided into two stages. The first stage may be determined from signaling of ANSam and /ANSam. At this stage, it may not be determined that the service is a high-speed facsimile service. Only if V21 or CM (Fax) occurs again in the second stage, it indicates of an entry into the second stage of a high-speed facsimile service. Preferably, the high-speed service is transferred through T.38 for a high efficiency.

Therefore, /ANSam and ANSam are signals indicating an initial stage of a high-speed facsimile, but still may not be used to determine the type of a facsimile service. That is, even if the signal ANSam occurs, it only indicates a possible occurrence of a high-speed facsimile, and a voice communication may also be possible to occur. Thus, a hasty switching to T.38 shall not be performed, and only an occurrence of V21 or CM (Fax) may indicate that a facsimile has really been started.

In view of this, according to the third embodiment of the invention, the signaling of /ANSam and ANSam is firstly detected, and upon detection of the signaling, the codec is switched to the G.711 codec scheme. Thereafter, the signaling of V21 or CM (Fax) is detected, and upon detection of the signaling, the codec is switched to the T.38 codec scheme. For a high-speed facsimile service, service-related signaling includes /ANSam, ANSam, V21 and CM (Fax), and corresponding codec schemes are codec schemes of G.711Red and T.38.

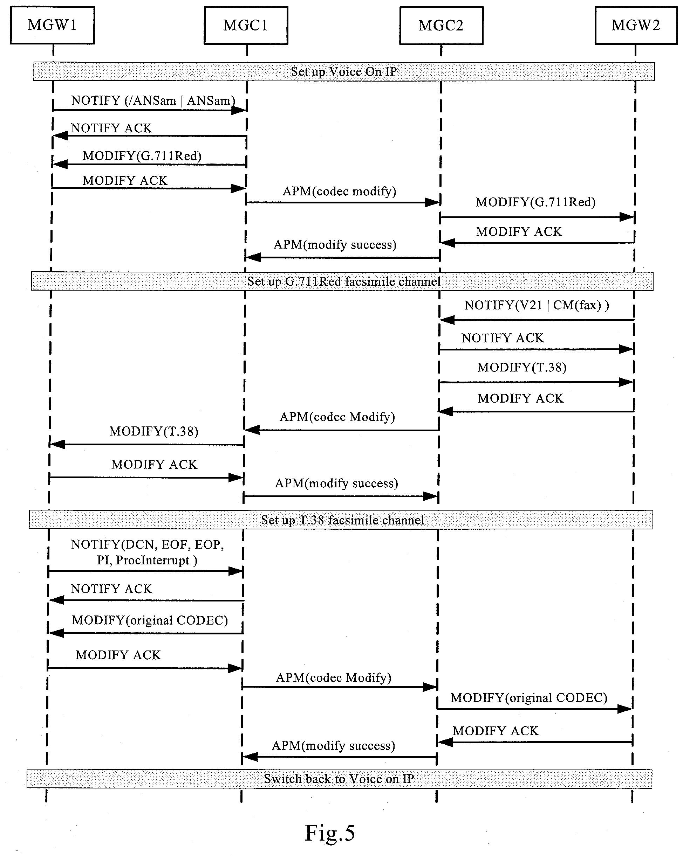

Fig.5 is an entire flow for transferring a high-speed facsimile service. In this flow, the first stage is a procedure of a high-speed Fax pass-through service by way of an example of G711Red, and this procedure is applicable to a case in which a negotiation result indicates that the MGWs at both sides support G.711Red. The MGW1 detects and reports the signaling of /ANSam and ANSam to the MGC1, and the MGC1 controls the MGWs to switch to G.711Red when determining that the reported signaling is /ANSam or ANSam. The following procedure is applicable to the case in which a negotiation result indicates that the MGWs at both sides support G.711Red.
(1) After a voice channel is set up, the MGW1 reports ANSam and /ANSam signals, to instruct the MGW to switch to a Fax pass-through channel.
(2) The MGC1 issues a Modify for modifying the codec of the IP endpoint to G.711 Red.
(3) G.711Red codec is carried to the opposite side through BICC, to ask the MGC2 to modify the codec to G.711Red.
(4) The MGC2 issues a Modify for modifying the codec of the called IP endpoint to G.711Red.
(5) The codec modification is completed, and thus a G.711Red Fax service channel is set up.
   In a procedure of the second stage, after switching to the G.711 Redundant codec scheme due to the detection of /ANSam signaling or ANSam signaling, the MGW2 detects and reports V21 signaling and CM (Fax) signaling to the MGC2; and when determining that the reported signaling is V21 or CM (Fax), the MGC2 controls the MGWs to switch to the T.38 codec scheme, so as to transfer the facsimile service in a higher speed.
(6) The MGC2 receives the V21 signal or the CM signal, with a parameter value of CM as "FAX", and the MGC2 instructs again the MGW to switch to a T.38 channel. For a MGW incapable of detecting a CM signal, the CM signal will not be reported, and no second switching will be performed, so that the pass-through procedure of a high-speed facsimile and the T.38 procedure are uniform for an MGC.
(7) The MGC2 issues a Modify for modifying the codec of the IP endpoint to T.38.
(8) T.38 is carried to the opposite side through BICC, to ask the MGC1 to modify the codec to T.38.
(9) The MGC1 issues a Modify for modifying the codec of the called IP endpoint to T.38.
(10) The codec modification is completed, and a T.38 high-speed facsimile service channel is set up.

The subsequent procedure, i.e., the procedure of switching back from the T.38 codec to the original codec upon determination of a facsimile, is identical to that of the second part of Fig.4.

In a fourth embodiment of the invention, a signaling exchange procedure of detection and switching will be provided for a MODEM service. For the MODEM service, service-related signaling includes /ANSam, ANSam, /ANS and CM (Modem), and corresponding codec schemes include G711Red and T.38 codec schemes. The MGW1 detects and reports the signaling of /ANS, /ANSam and ANSam to the MGC1, and upon determining that the reported signaling is any one of /ANS, /ANSam and ANSam, the MGC1 controls the MGWs to switch to the G.711 Redundant codec scheme.

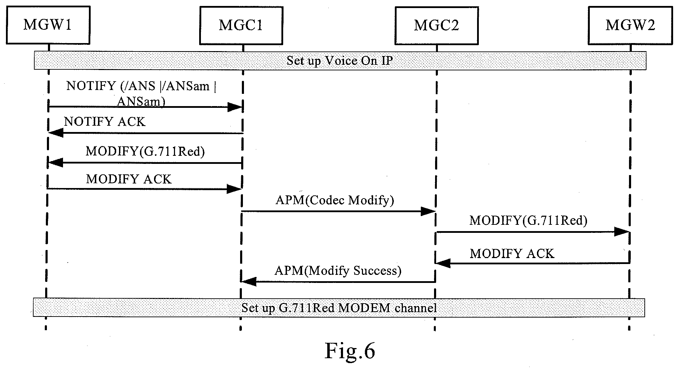

Fig.6 shows a procedure of transferring an ordinary modem service. For an ordinary modem service, only the signaling /ANS needs to be detected, and upon detection, the codec will be switched to the G.711Red codec scheme.
(1) For an ordinary modem service, after a voice channel is set up, the MGW 1 reports a /ANS signal, and a soft switch (also referred to as SOFTX1) instructs the MGW to switch to a modem pass-through channel.
(2) The MGC1 issues a Modify for modifying the codec of the IP endpoint to G.711Red.
(3) G.711Red is carried to the opposite side through BICC, to ask the MGC2 to modify the codec to G.711Red.
(4) The MGC2 issues a Modify for modifying the codec of the called IP endpoint to G.711Red.
(5) The codec modification is completed, and a G.711Red-based ordinary modem service channel is set up.

Practically, the procedure as illustrated in Fig.6 is substantially the same as that in Fig.3 for an ordinary facsimile service, and similar to that in Fig.5 for a high-speed modem service, and thus descriptions of which will not be repeated here. The essence is that in the (1) of Fig.6, for a high-speed modem service, the MGW1 reports a signal of /ANSam or ANSam, and then a SOFTX1 instructs the MGW to switch to a modem pass-through channel and to use the G.711Red codec. Thereafter, if the signaling CM (MODEM) is detected, the processing procedure is identical to that of the high-speed facsimile service with T.38, again switching to a T.38 codec channel.

For other data services, G.711Red and T.38 may be used as the codec for a service with low rate, the processing procedure for which is identical to those in Fig.3 and Fig.4; and T.38 may be used as the codec of a service with high rate, the processing procedure for which may be referred to Fig.5.

Additionally, during the above signaling detection, if lossless transport of a signal is required, after the MGW detects the service-related signaling of facsimile, modem, etc., the signaling may be transferred in a bearing plane directly in a lossless-transport way (reference to RFC 2833); or after the MGW detects a facsimile or modem signal, the signal may be transferred out of band in an extension way, so that it is possible to ensure that the signaling still may be transferred in a lossless way after being detected.

It shall be appreciated by those skilled in the art that, the service types in the above embodiments include services of VoIP, high-speed Fax, Data and high-speed/low-speed Modem, and the codec schemes used for the services are G729, G.711Red, T.38, etc. For other application contexts and requirements, signaling related to other services may be detected, and also may be transferred efficiently using other codec schemes, so as to attain the objects of the invention, without departing from the scope of the invention.

Similarly, for services of Fax, MODEM, etc., in addition to V21, ANSam, etc., other service-related signaling may also be employed to determine the service types, or new characteristic signaling to be developed in the future may also be employed, to determine the service types, so as to successfully switch to an appropriate codec scheme and thus to achieve the objects of the invention, without departing from the scope of the invention.

Furthermore, different implementations are possible for different TICC protocols. For BICC protocol, for example, a code re-negotiation procedure may be used to modify the code of facsimile and data, so as to achieve the objects of the invention, without departing from the scope of the invention.

Moreover, in each of the above embodiments, the calling and called MGCs control their respective MGWs. In another embodiment of the invention, an implementation similar to that described above with respect to the above embodiments may be enabled in the case that the same MGC controls the calling and called MGWs.

Although the invention has been illustrated and described with reference to some preferred embodiments, it shall be appreciated by those skilled in the art that various modifications may be made in formality and detail without departing from the scope of the invention.

## Claims

1. A method for Internet Protocol-based service transport comprising:
negotiating and determining, by a calling media gateway controller and a called media gateway controller (MGC1, MGC2), a codec scheme supported by both calling and called parties through a transport independent call control protocol, wherein the codec scheme is a codec scheme of G.711 Redundant or T.38;
during a call process, initiating, by the calling media gateway controller and the called media gateway controller (MGC1, MGC2), requests for detecting a service to their respective media gateways (MGW1, MGW2);
upon detection of characteristic signaling of the service, reporting, by the calling or called media gateway (MGW1), the characteristic signaling to the media gateway controller (MGC1) of the calling or called media gateway (MGW1);
determining, by the media gateway controller (MGC1), the type of the service according to the characteristic signaling;
switching, by the media gateway controller (MGC1) of the calling or called media gateway (MGW1), the codec scheme of the calling or called media gateway (MGW1) to a codec scheme corresponding to the type of the service;
sending, by the media gateway controller (MGC1) of the calling or called media gateway (MGW1), an application transport message of bearer independent call control protocol to the other media gateway controller (MGC2) to notify the other media gateway controller (MGC2) to switch to the codec scheme corresponding to the type of the service;
switching, by the other media gateway controller (MGC2), a codec scheme of the media gateway (MGW2) corresponding to the other media gateway controller (MGC2) to the codec scheme corresponding to the type of the service; and
performing, by the media gateways (MGW1, MGW2), a corresponding type of service transport by using the switched codec scheme.

2. The method according to claim 1, wherein in the initiating requests for detecting a service, the media gateway controllers (MGC1, MGC2) initiate the requests for detecting a service by sending a Modify message to the media gateways (MGW1, MGW2).

3. The method according to claim 1, wherein the reporting the characteristic signaling, determining the type of the service, sending the application transport message and switching codec schemes of the calling media gateway and the called media gateway (MGW1, MGW2) comprise:
upon detection of characteristic signaling of a low-speed service, reporting, by the calling or called media gateway (MGW1), the characteristic signaling to the media gateway controller (MGC1) corresponding to the calling or called media gateway (MGW1);
determining, by the media gateway controller (MGC1), a codec scheme of G.711 Redundant or T.38 required to be switched to;
switching, by the media gateway controller (MGC1) of the calling or called media gateway (MGW1), the codec scheme of the calling or called media gateway (MGW1) to the codec scheme of G.711 Redundant or T.38 through a signaling exchange between the media gateway controller (MGC1) and the calling or called media gateway (MGW1);
sending, by the media gateway controller (MGC1) of the calling or called media gateway (MGW1), the application transport message to the other media gateway controller (MGC2) to notify the other media gateway controller (MGC2) to switch to the determined codec scheme; and
switching, by the other media gateway controller (MGC2), the codec scheme of the media gateway (MGW2) corresponding to the other media gateway controller (MGC2) to the codec scheme of G.711 Redundant or T.38 through a signaling exchange between the other media gateway controller (MGC2) and the media gateway (MGW2) corresponding to the other media gateway controller (MGC2).

4. The method according to claim 3, wherein the low-speed service is an ordinary facsimile service, and both the calling and called media gateways (MGW1, MGW2) support the G.711 Redundant codec scheme, and wherein the reporting the characteristic signaling upon detection of characteristic signaling of the low-speed service, the determining the codec scheme, the sending the application transport message and the switching the codec schemes of the calling and called media gateways (MGW1, MGW2) respectively to a codec scheme of G.711 Redundant or T.38 comprise:
upon detection of the characteristic signaling of the ordinary facsimile service, reporting, by the calling or called media gateway (MGW1), the characteristic signaling to the media gateway controller (MGC1) corresponding to the calling or called media gateway (MGW1);
determining, by the media gateway controller (MGC1), that it is required to switch to the G.711 Redundant codec scheme after determining that the characteristic signaling comprises signaling V21;
modifying, by the media gateway controller (MGC1), the codec scheme of the media gateway (MGW1) corresponding to the media gateway controller (MGC1) to the G.711 Redundant codec scheme;
sending, by the media gateway controller (MGC1), the application transport message to the other media gateway controller (MGC2) to notify the other media gateway controller (MGC2) that it is required to switch to the G.711 Redundant codec scheme; and
modifying, by the other media gateway controller (MGC2), the codec scheme of the media gateway (MGW2) corresponding to the other media gateway controller (MGC2) to the G.711 Redundant codec scheme.

5. The method according to claim 3, wherein the low-speed service is an ordinary modem service, and both the calling and called media gateways (MGW1, MGW2) support the G.711 Redundant codec scheme, and wherein the reporting the characteristic signaling upon detection of characteristic signaling of the low-speed service, the determining the codec scheme, the sending the application transport message and the switching the codec schemes of the calling and called media gateways (MGW1, MGW2) respectively to a codec scheme of G.711 Redundant or T.38 comprise:
upon detection of the characteristic signaling of the ordinary modem service, reporting, by the calling or called media gateway (MGW1), the characteristic signaling to the media gateway controller (MGC1) corresponding to the calling or called media gateway (MGW1);
determining, by the media gateway controller (MGC1), that it is required to switch to the G.711 Redundant codec scheme after determining that the characteristic signaling comprises signaling /ANS, /ANSam or ANSam;
modifying, by the media gateway controller (MGC1), the codec scheme of the media gateway (MGW1) corresponding to the media gateway controller (MGC1) to the G.711 Redundant codec scheme;
sending, by the media gateway controller (MGC1), the application transport message to the other media gateway controller (MGC2) to notify the other media gateway controller (MGC2) that it is required to switch to the G.711 Redundant codec scheme; and
modifying, by the other media gateway controller (MGC2), the codec scheme of the media gateway (MGW2) corresponding to the other media gateway controller (MGC2) to the G.711 Redundant codec scheme.

6. The method according to claim 3, wherein the low-speed service is an ordinary facsimile service, and both the calling and called media gateways (MGW1, MGW2) support the T.38 codec scheme, and wherein the reporting the characteristic signaling upon detection of characteristic signaling of the low-speed service, the determining the codec scheme, the sending the application transport message and the switching the codec schemes of the calling and called media gateways (MGW1, MGW2) respectively to a codec scheme of G.711 Redundant or T.38 comprise:
upon detection of the characteristic signaling of the ordinary facsimile service, reporting, by the calling or called media gateway (MGW1), the characteristic signaling to the media gateway controller (MGC1) corresponding to the calling or called media gateway (MGW1);
determining, by the media gateway controller (MGC1), that it is required to switch to the T.38 codec scheme after determining that the characteristic signaling comprises signaling V21;
modifying, by the media gateway controller (MGC1), the codec scheme of the media gateway (MGW1) corresponding to the media gateway controller (MGC1) to the T.38 codec scheme;
sending, by the media gateway controller (MGC1), the application transport message to the other media gateway controller (MGC2) to notify the other media gateway controller (MGC2) that it is required to switch to the T.38 codec scheme; and
modifying, by the other media gateway controller (MGC2), the codec scheme of the media gateway (MGW2) corresponding to the other media gateway controller (MGC2) to the T.38 codec scheme.

7. The method according to claim 1, wherein the reporting the characteristic signaling, determining the type of the service, sending the application transport message and switching codec schemes of the calling media gateway and the called media gateway (MGW1, MGW2) comprise:
upon detection of characteristic signaling of a high-speed service, reporting, by the calling or called media gateway (MGW1), the characteristic signaling to the media gateway controller (MGC1) corresponding to the calling or called media gateway (MGW1);
determining, by the media gateway controller (MGC1), a codec scheme of T.3 8 required to be switched to;
switching, by the media gateway controller (MGC1) of the calling or called media gateway (MGW1), the codec scheme of the calling or called media gateway (MGW1) to the codec scheme of T.38 through a signaling exchange between the media gateway controller (MGC1) and the calling or called media gateway (MGW1);
sending, by the media gateway controller (MGC1) of the calling or called media gateway (MGW1), the application transport message to the other media gateway controller (MGC2) to notify the other media gateway controller (MGC2) to switch to the determined codec scheme; and
switching, by the other media gateway controller (MGC2), the codec scheme of the media gateway (MGW2) corresponding to the other media gateway controller (MGC2) to the codec scheme of T.38 through a signaling exchange between the other media gateway controller (MGC2) and the media gateway (MGW2) corresponding to the other media gateway controller (MGC2).

8. The method according to claim 7, wherein the high-speed service is a high-speed facsimile service, and both the calling and called media gateways (MGW1, MGW2) support the codec schemes of G.711 Redundant and T.38, and wherein the reporting the characteristic signaling upon detection of characteristic signaling of a high-speed service, the determining the codec scheme, the sending the application transport message and the switching the codec schemes of the calling and called media gateways (MGW1, MGW2) respectively to a codec scheme of T.38 comprise:
upon detection of the characteristic signaling of the high-speed facsimile service, reporting, by the calling or called media gateway (MGW1), the characteristic signaling to the media gateway controller (MGC1) corresponding to the calling or called media gateway (MGW1);
determining, by the media gateway controller (MGC1), that it is required to switch to the G.711 Redundant codec scheme after determining that the characteristic signaling comprises signaling /ANSam or ANSam;
modifying, by the media gateway controller (MGC1), the codec scheme of the media gateway (MGW1) corresponding to the media gateway controller (MGC1) to the G.711 Redundant codec scheme;
sending, by the media gateway controller (MGC1), the application transport message to the other media gateway controller (MGC2) to notify the other media gateway controller (MGC2) that it is required to switch to the G.711 Redundant codec scheme;
modifying, by the other media gateway controller (MGC2), the codec scheme of the media gateway (MGW2) corresponding to the other media gateway controller (MGC2) to the G.711 Redundant codec scheme; and
setting up a facsimile service channel with the G.711 Redundant codec scheme between the calling and called media gateways (MGW1, MGW2);
upon detection of signaling of V21 or CM facsimile, reporting, by the calling or called media gateway (MGW1), the signaling to the media gateway controller (MGC1) corresponding to the calling or called media gateway (MGW1);
determining, by the media gateway controller (MGC1), that it is required to switch to the T.38 codec scheme according to the received signaling;
modifying, by the media gateway controller (MGC1), the codec scheme of the media gateway (MGW1) corresponding to the media gateway controller (MGC1) to the T.38 codec scheme;
sending, by the media gateway controller (MGC1), the application transport message to the other media gateway controller (MGC2) to notify the other media gateway controller (MGC2) that it is required to switch to the T.38 codec scheme; and
modifying, by the other media gateway controller (MGC2), the codec scheme of the media gateway (MGW2) corresponding to the other media gateway controller (MGC2) to the T.38 codec scheme.

9. The method according to claim 7, wherein the high-speed service is a high-speed modem service, and both the calling and called media gateways (MGW1, MGW2) support the codec schemes of G.711 Redundant and T.38, and wherein the reporting the characteristic signaling upon detection of characteristic signaling of a high-speed service, the determining the codec scheme, the sending the application transport message and the switching the codec schemes of the calling and called media gateways (MGW1, MGW2) respectively to a codec scheme of T.38 comprise:
upon detection of the characteristic signaling of the high-speed modem service, reporting, by the calling or called media gateway (MGW1), the characteristic signaling to the media gateway controller (MGC1) corresponding to the calling or called media gateway (MGW1);
determining, by the media gateway controller (MGC1), that it is required to switch to the G.711 Redundant codec scheme after determining that the characteristic signaling comprises signaling /ANSam or ANSam;
modifying, by the media gateway controller (MGC1), the codec scheme of the media gateway (MGW1) corresponding to the media gateway controller (MGC1) to the G.711 Redundant codec scheme;
sending, by the media gateway controller (MGC1), the application transport message to the other media gateway controller (MGC2) to notify the other media gateway controller (MGC2) that it is required to switch to the G.711 Redundant codec scheme;
modifying, by the other media gateway controller (MGC2), the codec scheme of the media gateway (MGW2) corresponding to the other media gateway controller (MGC2) to the G.711 Redundant codec scheme; and
setting up a modem pass-through channel with the G.711 Redundant codec scheme between the calling and called media gateways (MGW1, MGW2);
upon detection of signaling of CM modem, reporting, by the calling or called media gateway (MGW1), the signaling to the media gateway controller (MGC1) corresponding to the calling or called media gateway (MGW1);
determining, by the media gateway controller (MGC1), that it is required to switch to the T.38 codec scheme according to the received signaling;
modifying, by the media gateway controller (MGC1), the codec scheme of the media gateway (MGW1) corresponding to the media gateway controller (MGC1) to the T.38 codec scheme;
sending, by the media gateway controller (MGC1), the application transport message to the other media gateway controller (MGC2) to notify the other media gateway controller (MGC2) that it is required to switch to the T.38 codec scheme; and
modifying, by the other media gateway controller (MGC2), the codec scheme of the media gateway (MGW2) corresponding to the other media gateway controller (MGC2) to the T.38 codec scheme.

10. The method according to any one of claims 3 and 6 to 9, wherein after the performing the corresponding type of service transport, the method further comprises:
detecting, by the calling or called media gateway (MGW1, MGW2), a termination of the service transport, and reporting characteristic signaling of facsimile termination to the media gateway controller (MGC1, MGC2) corresponding to the calling or called media gateway (MGW1, MGW2);
determining, by the media gateway controller (MGC1, MGC2), that it is required to switch currently back to the original codec scheme according to the characteristic signaling of facsimile termination;
modifying, by the media gateway controller (MGC1, MGC2), the codec scheme of the media gateway (MGW1, MGW2) corresponding to the media gateway controller (MGC1, MGC2) to the original codec scheme; and sending, by the media gateway controller (MGC1, MGC2), an application transport message to the other media gateway controller (MGC2, MGC1) to notify the other media gateway controller (MGC2, MGC1) that it is required to switch to the original codec scheme, and modifying, by the other media gateway controller (MGC2, MGC1), the codec scheme of the media gateway (MGW2, MGW1) corresponding to the other media gateway controller (MGC2, MGC1) to the original codec scheme.

11. The method according to any one of claims 1 to 9, further comprising:
upon detection of the characteristic signaling of the service, transferring, by the calling media gateway or the called media gateway (MGW1), the characteristic signaling of the service in a bearing plane with lossless transport, or transferring the characteristic signaling of the service out of band in an extended way.

12. The method according to claim 1, wherein the negotiating and determining the codec scheme supported by both the calling and called parties comprises:
sending, by the calling media gateway controller (MGC 1, MGC2), the codec schemes supported by the calling party to the called media gateway controller (MGC2, MGC1);
selecting, by the called media gateway controller (MGC2, MGC1), from the codec schemes supported by the calling party a codec scheme supported by the called party, and returning the codec scheme to the calling media gateway controller (MGC1, MGC2) as the codec scheme supported by both the calling and called parties.

13. The method according to claim 4, 5, 6, 8 or 9, wherein the reporting the characteristic signaling to the corresponding media gateway controller (MGC1) comprises:
reporting the characteristic signaling to the media gateway controller (MGC1) through a Notify message.

14. The method according to claim 4, 5, 6, 8 or 9, wherein the modifying by the media gateway controller (MGC1, MGC2) a codec scheme of the media gateway (MGW1, MGW2) corresponding to the media gateway controller (MGC1, MGC2) comprises:
sending, by the media gateway controller (MGC1, MGC2), to the media gateway (MGW1, MGW2) a Modify message carrying the codec scheme required to be switched to, and upon receipt of the Modify message, modifying, by the media gateway (MGW1, MGW2), its codec scheme to the codec scheme carried in the Modify message.

## Patentansprüche

1. Verfahren für Internetprotokoll-basierte Diensttransporte, das Folgendes umfasst:
Aushandeln und Bestimmen eines sowohl von einem rufenden als auch von einem gerufenen Teilnehmer unterstützten Codec-Schemas über ein transportunabhängiges Verbindungssteuerungsprotokoll durch einen rufenden "Media Gateway Controller" und einen gerufenen "Media Gateway Controller" (MGC1, MGC2), wobei das Codec-Schema ein G.711-Redundant- oder ein T.38-Codec-Schema ist;
während eines Rufvorgangs, Initiieren von Aufforderungen durch den rufenden "Media Gateway Controller" und den gerufenen "Media Gateway Controller" (MGC1, MGC2) zum Detektieren eines Dienstes an ihre jeweiligen "Media Gateways" (MGW1, MGW2);
bei der Detektion einer charakteristischen Signalisierung des Dienstes, Melden der charakteristischen Signalisierung durch das rufende oder gerufene "Media Gateway" (MGW1) an den "Media Gateway Controller" (MGC1) des rufenden oder gerufenen "Media Gateways" (MGW1);
Bestimmen des Typs des Dienstes gemäß der charakteristischen Signalisierung durch den "Media Gateway Controller" (MGC1);
Wechseln des Codec-Schemas des rufenden oder gerufenen "Media Gateways" (MGW1) zu einem mit dem Typ des Dienstes korrespondierenden Codec-Schema durch den "Media Gateway Controller" (MGC1) des rufenden oder gerufenen "Media Gateways" (MGW1);
Senden einer Anwendungstransportnachricht eines trägerunabhängigen Verbindungssteuerungsprotokolls durch den "Media Gateway Controller" (MGC1) des rufenden oder gerufenen "Media Gateways" (MGW1) an den anderen "Media Gateway Controller" (MGC2), um dem anderen "Media Gateway Controller" (MGC2) den Wechsel zum mit dem Typ des Dienstes korrespondierenden Codec-Schema anzukündigen;
Wechseln eines Codec-Schemas des mit dem anderen "Media Gateway Controller" (MGC2) korrespondierenden "Media Gateways" (MGW2) zum mit dem Typ des Dienstes korrespondierenden Codec-Schema durch den anderen "Media Gateway Controller" (MGC2); und
Durchführen eines korrespondierenden Typs eines Diensttransports durch die "Media Gateways" (MGW1, MGW2) durch Verwendung des Codec-Schemas aus dem Wechsel.

2. Verfahren nach Anspruch 1, wobei die "Media Gateway Controller" (MGC1, MGC2) beim Initiieren von Aufforderungen zum Detektieren eines Dienstes die Aufforderungen zum Detektieren eines Dienstes durch Senden einer "Modify"-Nachricht an die "Media Gateways" (MGW1, MGW2) initiieren.

3. Verfahren nach Anspruch 1, wobei das Melden der charakteristischen Signalisierung, das Bestimmen des Typs des Dienstes, das Senden der Anwendungstransportnachricht und das Wechseln zwischen Codec-Schemata des rufenden "Media Gateways" und des gerufenen "Media Gateways" (MGW1, MGW2) Folgendes umfassen:
bei der Detektion einer charakteristischen Signalisierung eines langsamen Dienstes, Melden der charakteristischen Signalisierung durch das rufende oder gerufene "Media Gateway" (MGW1) an den mit dem rufenden oder gerufenen "Media Gateway" (MGW1) korrespondierenden "Media Gateway Controller" (MGC1);
Bestimmen eines G.711-Redundant- oder T.38-Codec-Schemas, zu dem gewechselt werden soll, durch den "Media Gateway Controller" (MGC1);
Wechseln des Codec-Schemas des rufenden oder gerufenen "Media Gateways" (MGW1) zum G.711-Redundant- oder T.38-Codec-Schema durch den "Media Gateway Controller" (MGC1) des rufenden oder gerufenen "Media Gateways" (MGW1) über einen Signalisierungsaustausch zwischen dem "Media Gateway Controller" (MGC1) und dem rufenden oder gerufenen "Media Gateway" (MGW1); Senden der Anwendungstransportnachricht durch den "Media Gateway Controller" (MGC1) des rufenden oder gerufenen "Media Gateways" (MGW1) an den anderen "Media Gateway Controller" (MGC2), um dem anderen "Media Gateway Controller" (MGC2) den Wechsel zum bestimmten Codec-Schema anzukündigen; und
Wechseln des Codec-Schemas des mit dem anderen "Media Gateway Controller" (MGC2) korrespondierenden "Media Gateways" (MGW2) zum G.711-Redundant- oder T.38-Codec-Schema durch den anderen "Media Gateway Controller" (MGC2) über einen Signalisierungsaustausch zwischen dem anderen "Media Gateway Controller" (MGC2) und dem mit dem anderen "Media Gateway Controller" (MGC2) korrespondierenden "Media Gateway" (MGW2).

4. Verfahren nach Anspruch 3, wobei der langsame Dienst ein gewöhnlicher Telefaxdienst ist und sowohl das rufende als auch das gerufene "Media Gateway" (MGW1, MGW2) das G.711-Redundant-Codec-Schema unterstützen, und wobei das Melden der charakteristischen Signalisierung bei der Detektion einer charakteristischen Signalisierung des langsamen Dienstes, das Bestimmen des Codec-Schemas, das Senden der Anwendungstransportnachricht und das Wechseln der Codec-Schemata des rufenden bzw. des gerufenen "Media Gateways" (MGW1, MGW2) zu einem G.711-Redundant- oder einem T.38-Codec-Schema Folgendes umfassen:
bei der Detektion der charakteristischen Signalisierung des gewöhnlichen Telefaxdienstes, Melden der charakteristischen Signalisierung durch das rufende oder gerufene "Media Gateway" (MGW1) an den mit dem rufenden oder gerufenen "Media Gateway" (MGW1) korrespondierenden "Media Gateway Controller" (MGC1);
Bestimmen durch den "Media Gateway Controller" (MGC1), dass er zum G.711-Redundant-Codec-Schema wechseln soll, nach dem Bestimmen, dass die charakteristische Signalisierung eine V21-Signalisierung umfasst;
Modifizieren des Codec-Schemas des mit dem "Media Gateway Controller" (MGC1) korrespondierenden "Media Gateways" (MGW1) in das G.711-Redundant-Codec-Schema durch den "Media Gateway Controller" (MGC1);
Senden der Anwendungstransportnachricht durch den "Media Gateway Controller" (MGC1) an den anderen "Media Gateway Controller" (MGC2), um dem anderen "Media Gateway Controller" (MGC2) anzukündigen, dass er zum G.711-Redundant-Codec-Schema wechseln soll; und
Modifizieren des Codec-Schemas des mit dem anderen "Media Gateway Controller" (MGC2) korrespondierenden "Media Gateways" (MGW2) in das G.711-Redundant-Codec-Schema durch den anderen "Media Gateway Controller" (MGC2).

5. Verfahren nach Anspruch 3, wobei der langsame Dienst ein gewöhnlicher Modemdienst ist und sowohl das rufende als auch das gerufene "Media Gateway" (MGW1, MGW2) das G.711-Redundant-Codec-Schema unterstützen, und wobei das Melden der charakteristischen Signalisierung bei der Detektion einer charakteristischen Signalisierung des langsamen Dienstes, das Bestimmen des Codec-Schemas, das Senden der Anwendungstransportnachricht und das Wechseln der Codec-Schemata des rufenden bzw. des gerufenen "Media Gateways" (MGW1, MGW2) zu einem G.711-Redundant- oder einem T.38-Codec-Schema Folgendes umfassen:
bei der Detektion der charakteristischen Signalisierung des gewöhnlichen Modemdienstes, Melden der charakteristischen Signalisierung durch das rufende oder gerufene "Media Gateway" (MGW1) an den mit dem rufenden oder gerufenen "Media Gateway" (MGW1) korrespondierenden "Media Gateway Controller" (MGC1);
Bestimmen durch den "Media Gateway Controller" (MGC1), dass er zum G.711-Redundant-Codec-Schema wechseln soll, nach dem Bestimmen, dass die charakteristische Signalisierung eine /ANS-, eine /ANSam- oder eine ANSam-Signalisierung umfasst;
Modifizieren des Codec-Schemas des mit dem "Media Gateway Controller" (MGC1) korrespondierenden "Media Gateways" (MGW1) in das G.711-Redundant-Codec-Schema durch den "Media Gateway Controller" (MGC1);
Senden der Anwendungstransportnachricht durch den "Media Gateway Controller" (MGC1) an den anderen "Media Gateway Controller" (MGC2), um dem anderen "Media Gateway Controller" (MGC2) anzukündigen, dass er zum G.711-Redundant-Codec-Schema wechseln soll; und
Modifizieren des Codec-Schemas des mit dem "Media Gateway Controller" (MGC2) korrespondierenden "Media Gateways" (MGW2) in das G.711-Redundant-Codec-Schema durch den anderen "Media Gateway Controller" (MGC2).

6. Verfahren nach Anspruch 3, wobei der langsame Dienst ein gewöhnlicher Telefaxdienst ist und sowohl das rufende als auch das gerufene "Media Gateway" (MGW1, MGW2) das T.38-Codec-Schema unterstützen, und wobei das Melden der charakteristischen Signalisierung bei der Detektion einer charakteristischen Signalisierung des langsamen Dienstes, das Bestimmen des Codec-Schemas, das Senden der Anwendungstransportnachricht und das Wechseln der Codec-Schemata des rufenden bzw. des gerufenen "Media Gateways" (MGW1, MGW2) zu einem G.711-Redundant- oder einem T.38-Codec-Schema Folgendes umfassen:
bei der Detektion der charakteristischen Signalisierung des gewöhnlichen Telefaxdienstes, Melden der charakteristischen Signalisierung durch das rufende oder gerufene "Media Gateway" (MGW1) an den mit dem rufenden oder gerufenen "Media Gateway" (MGW1) korrespondierenden "Media Gateway Controller" (MGC1);
Bestimmen durch den "Media Gateway Controller" (MGC1), dass er zum T.38-Codec-Schema wechseln soll, nach dem Bestimmen, dass die charakteristische Signalisierung eine V21-Signalisierung umfasst;
Modifizieren des Codec-Schemas des mit dem "Media Gateway Controller" (MGC1) korrespondierenden "Media Gateways" (MGW1) in das T.38-Codec-Schema durch den "Media Gateway Controller" (MGC1);
Senden der Anwendungstransportnachricht durch den "Media Gateway Controller" (MGC1) an den anderen "Media Gateway Controller" (MGC2), um dem anderen "Media Gateway Controller" (MGC2) anzukündigen, dass er zum T.38-Codec-Schema wechseln soll; und
Modifizieren des Codec-Schemas des mit dem anderen "Media Gateway Controller" (MGC2) korrespondierenden "Media Gateways" (MGW2) in das T.38-Codec-Schema durch den anderen "Media Gateway Controller" (MGC2).

7. Verfahren nach Anspruch 1, wobei das Melden der charakteristischen Signalisierung, das Bestimmen des Typs des Dienstes, das Senden der Anwendungstransportnachricht und das Wechseln der Codec-Schemata des rufenden "Media Gateways" und des gerufenen "Media Gateways" (MGW1, MGW2) Folgendes umfassen:
bei der Detektion einer charakteristischen Signalisierung eines schnellen Dienstes, Melden der charakteristischen Signalisierung durch das rufende oder gerufene "Media Gateway" (MGW1) an den mit dem rufenden oder gerufenen "Media Gateway" (MGW1) korrespondierenden "Media Gateway Controller" (MGC1);
Bestimmen eines T.38-Codec-Schemas, zu dem gewechselt werden soll, durch den "Media Gateway Controller" (MGC1);
Wechseln des Codec-Schemas des rufenden oder gerufenen "Media Gateways" (MGW1) zum T.38-Codec-Schema durch den "Media Gateway Controller" (MGC1) des rufenden oder gerufenen "Media Gateways" (MGW1) über einen Signalisierungsaustausch zwischen dem media Gateway Controller" (MGC1) und dem rufenden oder gerufenen "Media Gateway" (MGW1);
Senden der Anwendungstransportnachricht durch den "Media Gateway Controller" (MGC1) des rufenden oder gerufenen "Media Gateways" (MGW1) an den anderen "Media Gateway Controller" (MGC2), um dem anderen "Media Gateway Controller" (MGC2) den Wechsel zum bestimmten Codec-Schema anzukündigen; und
Wechseln des Codec-Schemas des mit dem anderen "Media Gateway Controller" (MGC2) korrespondierenden "Media Gateways" (MGW2) zum T.38-Codec-Schema durch den anderen "Media Gateway Controller" (MGC2) über einen Signalisierungsaustausch zwischen dem anderen "Media Gateway Controller" (MGC2) und dem mit dem anderen "Media Gateway Controller" (MGC2) korrespondierenden "Media Gateway" (MGW2).

8. Verfahren nach Anspruch 7, wobei der schnelle Dienst ein schneller Telefaxdienst ist und sowohl das rufende als auch das gerufene "Media Gateway" (MGW1, MGW2) das G.711-Redundant- und das T.38-Codec-Schema unterstützen, und wobei das Melden der charakteristischen Signalisierung bei der Detektion einer charakteristischen Signalisierung eines schnellen Dienstes, das Bestimmen des Codec-Schemas, das Senden der Anwendungstransportnachricht und das Wechseln der Codec-Schemata des rufenden bzw. des gerufenen "Media Gateways" (MGW1, MGW2) zu einem T.38-Codec-Schema Folgendes umfassen:
bei der Detektion der charakteristischen Signalisierung des schnellen Telefaxdienstes, Melden der charakteristischen Signalisierung durch das rufende oder gerufene "Media Gateway" (MGW1) an den mit dem rufenden oder gerufenen "Media Gateway" (MGW1) korrespondierenden "Media Gateway Controller" (MGC1);
Bestimmen durch den "Media Gateway Controller" (MGC1), dass er zum G.711-Redundant-Codec-Schema wechseln soll, nach dem Bestimmen, dass die charakteristische Signalisierung eine /ANSam- oder eine ANSam-Signalisierung umfasst;
Modifizieren des Codec-Schemas des mit dem "Media Gateway Controller" (MGC1) korrespondierenden "Media Gateways" (MGW1) in das G.711-Redundant-Codec-Schema durch den "Media Gateway Controller" (MGC1);
Senden der Anwendungstransportnachricht durch den "Media Gateway Controller" (MGC1) an den anderen "Media Gateway Controller" (MGC2), um dem anderen "Media Gateway Controller" (MGC2) anzukündigen, dass er zum G.711-Redundant-Codec-Schema wechseln soll;
Modifizieren des Codec-Schemas des mit dem anderen "Media Gateway Controller" (MGC2) korrespondierenden "Media Gateways" (MGW2) in das G.711-Redundant-Codec-Schema durch den anderen "Media Gateway Controller" (MGC2); und
Aufbauen eines Telefaxdienstkanals mit dem G.711-Redundant-Codec-Schema zwischen dem rufenden und dem gerufenen "Media Gateway" (MGW1, MGW2);
bei der Detektion einer V21- oder einer CM-Telefax-Signalisierung, Melden der Signalisierung durch das rufende oder gerufene "Media Gateway" (MGW1) an den mit dem rufenden oder gerufenen "Media Gateway" (MGW1) korrespondierenden "Media Gateway Controller" (MGC1);
Bestimmen durch den "Media Gateway Controller" (MGC1), dass er zum T.38-Codec-Schema wechseln soll, gemäß der empfangenen Signalisierung;
Modifizieren des Codec-Schemas des mit dem "Media Gateway Controller" (MGC1) korrespondierenden "Media Gateways" (MGW1) in das T.38-Codec-Schema durch den "Media Gateway Controller" (MGC1);
Senden der Anwendungstransportnachricht durch den "Media Gateway Controller" (MGC1) an den anderen "Media Gateway Controller" (MGC2), um dem anderen "Media Gateway Controller" (MGC2) anzukündigen, dass er zum T.38-Codec-Schema wechseln soll; und
Modifizieren des Codec-Schemas des mit dem anderen "Media Gateway Controller" (MGC2) korrespondierenden "Media Gateways" (MGW2) in das T.38-Codec-Schema durch den anderen "Media Gateway Controller" (MGC2).

9. Verfahren nach Anspruch 7, wobei der schnelle Dienst ein schneller Modemdienst ist und sowohl das rufende als auch das gerufene "Media Gateway" (MGW1, MGW2) das G.711-Redundant- und das T.38-Codec-Schema unterstützen, und wobei das Melden der charakteristischen Signalisierung bei der Detektion einer charakteristischen Signalisierung eines schnellen Dienstes, das Bestimmen des Codec-Schemas, das Senden der Anwendungstransportnachricht und das Wechseln der Codec-Schemata des rufenden bzw. des gerufenen "Media Gateways" (MGW1, MGW2) zu einem T.38-Codec-Schema Folgendes umfassen:
bei der Detektion der charakteristischen Signalisierung des schnellen Modemdienstes, Melden der charakteristischen Signalisierung durch das rufende oder gerufene "Media Gateway" (MGW1) an den mit dem rufenden oder gerufenen "Media Gateway" (MGW1) korrespondierenden "Media Gateway Controller" (MGC1);
Bestimmen durch den "Media Gateway Controller" (MGC1), dass er zum G.711-Redundant-Codec-Schema wechseln soll, nach dem Bestimmen, dass die charakteristische Signalisierung eine /ANSam- oder eine ANSam-Signalisierung umfasst;
Modifizieren des Codec-Schemas des mit dem "Media Gateway Controller" (MGC1) korrespondierenden "Media Gateways" (MGW1) in das G.711-Redundant-Codec-Schema durch den "Media Gateway Controller" (MGC1);
Senden der Anwendungstransportnachricht durch den "Media Gateway Controller" (MGC1) an den anderen "Media Gateway Controller" (MGC2), um dem anderen "Media Gateway Controller" (MGC2) anzukündigen, dass er zum G.711-Redundant-Codec-Schema wechseln soll;
Modifizieren des Codec-Schemas des mit dem anderen "Media Gateway Controller" (MGC2) korrespondierenden "Media Gateways" (MGW2) in das G.711-Redundant-Codec-Schema durch den anderen "Media Gateway Controller" (MGC2); und
Aufbauen eines Modem-"Pass-Through"-Kanals mit dem G.711-Redundant-Codec-Schema zwischen dem rufenden und dem gerufenen "Media Gateway" (MGW1, MGW2);
bei der Detektion einer CM-Modem-Signalisierung, Melden der Signalisierung durch das rufende oder gerufene "Media Gateway" (MGW1) an den mit dem rufenden oder gerufenen "Media Gateway" (MGW1) korrespondierenden "Media Gateway Controller" (MGC1);
Bestimmen durch den "Media Gateway Controller" (MGC1), dass er zum T.38-Codec-Schema wechseln soll, gemäß der empfangenen Signalisierung;
Modifizieren des Codec-Schemas des mit dem "Media Gateway Controller" (MGC1) korrespondierenden "Media Gateways" (MGW1) in das T.38-Codec-Schema durch den "Media Gateway Controller" (MGC1);
Senden der Anwendungstransportnachricht durch den "Media Gateway Controller" (MGC1) an den anderen "Media Gateway Controller" (MGC2), um dem anderen "Media Gateway Controller" (MGC2) anzukündigen, dass er zum T.38-Codec-Schema wechseln soll; und
Modifizieren des Codec-Schemas des mit dem anderen "Media Gateway Controller" (MGC2) korrespondierenden "Media Gateways" (MGW2) in das T.38-Codec-Schema durch den anderen "Media Gateway Controller" (MGC2).

10. Verfahren nach einem der Ansprüche 3 und 6 bis 9, wobei das Verfahren nach dem Durchführen des korrespondierenden Typs eines Diensttransports ferner Folgendes umfasst:
Detektieren einer Beendigung des Diensttransports durch das rufende oder das gerufene "Media Gateway" (MGW1, MGW2) und Melden einer charakteristischen Signalisierung der Telefaxbeendigung an den mit dem rufenden oder dem gerufenen "Media Gateway" (MGW1, MGW2) korrespondierenden "Media Gateway Controller" (MGC1, MGC2);
Bestimmen durch den "Media Gateway Controller" (MGC1, MGC2), dass er momentan zum ursprünglichen Codec-Schema zurückwechseln soll, gemäß der charakteristischen Signalisierung der Telefaxbeendigung;
Modifizieren des Codec-Schemas des mit dem "Media Gateway Controller" (MGC1, MGC2) korrespondierenden "Media Gateways" (MGW1, MGW2) in das ursprüngliche Codec-Schema durch den "Media Gateway Controller" (MGC1, MGC2); und Senden einer Anwendungstransportnachricht durch den "Media Gateway Controller" (MGC1, MGC2) an den anderen "Media Gateway Controller" (MGC2, MGC1), um dem anderen "Media Gateway Controller" (MGC2, MGC1) anzukündigen, dass er zum ursprünglichen Codec-Schema wechseln soll, und Modifizieren des Codec-Schemas des mit dem anderen "Media Gateway Controller" (MGC2, MGC1) korrespondierenden "Media Gateways" (MGW2, MGW1) in das ursprüngliche Codec-Schema durch den anderen "Media Gateway Controller" (MGC2, MGC1).

11. Verfahren nach einem der Ansprüche 1 bis 9, das ferner Folgendes umfasst:
bei der Detektion der charakteristischen Signalisierung des Dienstes, Übertragen der charakteristischen Signalisierung des Dienstes in einer Lagerungsebene mit verlustfreiem Transport durch das rufende "Media Gateway" oder das gerufene "Media Gateway" (MGW1) oder Übertragen der charakteristischen Signalisierung des Dienstes außerhalb des Bandes auf erweiterte Weise.

12. Verfahren nach Anspruch 1, wobei das Aushandeln und das Bestimmen des sowohl vom rufenden als auch vom gerufenen Teilnehmer unterstützten Codec-Schemas Folgendes umfassen:
Senden der vom rufenden Teilnehmer unterstützten Codec-Schemata durch den rufenden "Media Gateway Controller" (MGC1, MGC2) an den gerufenen "Media Gateway Controller" (MGC2, MGC1);
Auswählen eines vom gerufenen Teilnehmer unterstützten Codec-Schemas aus den vom rufenden Teilnehmer unterstützten Codec-Schemata durch den gerufenen "Media Gateway Controller" (MGC2, MGC1) und Zurücksenden des Codec-Schemas an den rufenden "Media Gateway Controller" (MGC1, MGC2) als das sowohl vom rufenden Teilnehmer als auch vom gerufenen Teilnehmer unterstützte Codec-Schema.

13. Verfahren nach Anspruch 4, 5, 6, 8 oder 9, wobei das Melden der charakteristischen Signalisierung an den korrespondierenden "Media Gateway Controller" (MGC1) Folgendes umfasst:
Melden der charakteristischen Signalisierung an den "Media Gateway Controller" (MGC1) über eine "Notify"-Nachricht.

14. Verfahren nach Anspruch 4, 5, 6, 8 oder 9, wobei das Modifizieren eines Codec-Schemas des mit dem "Media Gateway Controller" (MGC1, MGC2) korrespondierenden "Media Gateways" (MGW1, MGW2) durch den "Media Gateway Controller" (MGC1, MGC2) Folgendes umfasst:
Senden einer "Modify"-Nachricht, die das Codec-Schema, zu dem gewechselt werden soll, führt, durch den "Media Gateway Controller" (MGC1, MGC2) an das "Media Gateway" (MGW1, MGW2) und beim Empfang der "Modify"-Nachricht durch das "Media Gateway" (MGW1, MGW2) erfolgendes Modifizieren seines Codec-Schemas in das in der "Modify"-Nachricht geführte Codec-Schema.

## Revendications

1. Procédé permettant un transport de service basé IP, protocole Internet, comprenant les étapes suivantes :
négocier et déterminer, par un contrôleur de passerelle multimédia appelant et un contrôleur de passerelle multimédia appelé (MGC1, MGC2), un schéma de codec pris en charge par les deux parties appelante et appelée par l'intermédiaire d'un protocole de contrôle d'appel indépendant du transport, le schéma de codec étant un schéma de codec G.711 Redondant ou T.38 ;
durant un processus d'appel, initier, par le contrôleur de passerelle multimédia appelant et le contrôleur de passerelle multimédia appelé (MGC1, MGC2), des requêtes pour détecter un service auprès de leurs passerelles multimédia respectives (MGW1, MGW2) ;
lors de la détection d'une signalisation caractéristique du service, transmettre, par la passerelle multimédia appelante ou appelée (MGW1), la signalisation caractéristique au contrôleur de passerelle multimédia (MGC1) de la passerelle multimédia appelante ou appelée (MGW1);
déterminer, par le contrôleur de passerelle multimédia (MGC1), le type du service selon la signalisation caractéristique ;
commuter, par le contrôleur de passerelle multimédia (MGC1) de la passerelle multimédia appelante ou appelée (MGW1), le schéma de codec de la passerelle multimédia appelante ou appelée (MGW1) vers un schéma de codec correspondant au type du service ;
envoyer, par le contrôleur de passerelle multimédia (MGC1) de la passerelle multimédia appelante ou appelée (MGW1), un message de transport d'application d'un protocole de contrôle d'appel indépendant du support à l'autre contrôleur de passerelle multimédia (MGC2) pour notifier à l'autre contrôleur de passerelle multimédia (MGC2) de commuter vers le schéma de codec correspondant au type du service ;
commuter, par l'autre contrôleur de passerelle multimédia ((MGC2), un schéma de codec de la passerelle multimédia (MGW2) correspondant à l'autre contrôleur de passerelle multimédia (MGC2) vers le schéma de codec correspondant au type du service ; et
exécuter, par les passerelles multimédia (MGW1, MGW2), un type correspondant de transport de service en utilisant le schéma de codec commuté.

2. Procédé selon la revendication 1, dans lequel, dans l'étape consistant à initier des requêtes pour détecter un service, les contrôleurs de passerelle multimédia (MGC1, MGC2) initient les requêtes pour détecter un service en envoyant un message Modify aux passerelles multimédia (MGW1, MGW2).

3. Procédé selon la revendication 1, dans lequel les étapes consistant à transmettre la signalisation caractéristique, déterminer le type du service, envoyer le message de transport d'application et commuter les schémas de codec de la passerelle multimédia appelante et de la passerelle multimédia appelée (MGW1, MGW2) comprennent :
lors de la détection de la signalisation caractéristique d'un service à faible vitesse, transmettre, par la passerelle multimédia appelante ou appelée (MGW1), la signalisation caractéristique au contrôleur de passerelle multimédia (MGC) correspondant à la passerelle multimédia appelante ou appelée (MGW1) ;
déterminer, par le contrôleur de passerelle multimédia (MGC1), un schéma de codec G.711 Redondant ou T.38 vers lequel commuter ;
commuter, par le contrôleur de passerelle multimédia (MGC1) de la passerelle multimédia appelante ou appelée (MGW1), le schéma de codec de la passerelle multimédia appelante ou appelée (MGW1) vers le schéma de codec G.711 Redondant ou T.38 par l'intermédiaire d'un échange de signalisation entre le contrôleur de passerelle multimédia (MGC1) et la passerelle multimédia appelante ou appelée (MGW1) ;
envoyer, par le contrôleur de passerelle multimédia (MGC1) de la passerelle multimédia appelante ou appelée (MGW1), le message de transport d'application à l'autre contrôleur de passerelle multimédia (MGC2) pour notifier à l'autre contrôleur de passerelle multimédia (MGC2) de commuter vers le schéma de codec déterminé ; et
commuter, par l'autre contrôleur de passerelle multimédia (MGC2), le schéma de codec de la passerelle multimédia (MGW2) correspondant à l'autre contrôleur de passerelle multimédia (MGC2) vers le schéma de codec G.711 Redondant ou T.38 par l'intermédiaire d'un échange de signalisation entre l'autre contrôleur de passerelle multimédia (MGC2) et la passerelle multimédia (MGW2) correspondant à l'autre contrôleur de passerelle multimédia (MGC2).

4. Procédé selon la revendication 3, dans lequel le service à faible vitesse est un service de télécopie ordinaire, et les deux passerelle multimédia appelante et appelée (MGW1, MGW2) prennent en charge le schéma de codec G.711 Redondant, et les étapes consistant à transmettre la signalisation caractéristique lors de la détection de la signalisation caractéristique du service à faible vitesse, déterminer le schéma de codec, envoyer le message de transport d'application et commuter les schémas de codec des passerelles multimédia appelante et appelée (MGW1, MGW2) respectivement vers un schéma de codec G.711 Redondant ou T.38 comprennent :
lors de la détection de la signalisation caractéristique du service de télécopie ordinaire, transmettre, par la passerelle multimédia appelante ou appelée (MGW1), la signalisation caractéristique au contrôleur de passerelle multimédia (MGC1) correspondant à la passerelle multimédia appelante ou appelée (MGW1) ;
déterminer, par le contrôleur de passerelle multimédia (MGC1), qu'il faut commuter vers le schéma de codec G.711 Redondant après avoir déterminé que la signalisation caractéristique comprend la signalisation V21 ;
modifier, par le contrôleur de passerelle multimédia (MGC1), le schéma de codec de la passerelle multimédia (MGW1) correspondant au contrôleur de passerelle multimédia (MGC1) en le remplaçant par le schéma de codec G.711 Redondant ;
envoyer, par le contrôleur de passerelle multimédia (MGC1), le message de transport d'application à l'autre contrôleur de passerelle multimédia (MGC2) pour notifier à l'autre contrôleur de passerelle multimédia (MGC2) qu'il faut commuter vers le schéma de codec G.711 Redondant ; et
modifier, par l'autre contrôleur de passerelle multimédia (MGC2), le schéma de codec de la passerelle multimédia (MGW2) correspondant à l'autre contrôleur de passerelle multimédia (MGC2) en le remplaçant par le schéma de codec G.711 Redondant.

5. Procédé selon la revendication 3, dans lequel le service à faible vitesse est un service de modem ordinaire, et les deux passerelles multimédia appelante et appelée (MGW1, MGW2) prennent en charge le schéma de codec G.711 Redondant, et les étapes consistant à transmettre la signalisation caractéristique lors de la détection de la signalisation caractéristique du service à faible vitesse, déterminer le schéma de codec, envoyer le message de transport d'application et commuter les schémas de codec des passerelles multimédia appelante et appelée (MGW1, MGW2) respectivement vers un schéma de codec G.711 Redondant ou T.38 comprennent :
lors de la détection de la signalisation caractéristique du service de modem ordinaire, transmettre, par la passerelle multimédia appelante ou appelée (MGW1), la signalisation caractéristique au contrôleur de passerelle multimédia (MGC1) correspondant à la passerelle multimédia appelante ou appelée (MGW1) ;
déterminer, par le contrôleur de passerelle multimédia (MGC1), qu'il faut commuter vers le schéma de codec G.711 Redondant après avoir déterminé que la signalisation caractéristique comprend une signalisation /ANS, /ANSam ou ANSam ;
modifier, par le contrôleur de passerelle multimédia (MGC1), le schéma de codec de la passerelle multimédia (MGW1) correspondant au contrôleur de passerelle multimédia (MGC1) en le remplaçant par le schéma de codec G.711 Redondant ;
envoyer, par le contrôleur de passerelle multimédia (MGC1), le message de transport d'application à l'autre contrôleur de passerelle multimédia (MGC2) pour notifier à l'autre contrôleur de passerelle multimédia (MGC2) qu'il doit commuter vers le schéma de codec G.711 Redondant ; et
modifier, par l'autre contrôleur de passerelle multimédia (MGC2), le schéma de codec de la passerelle multimédia (MGW2) correspondant à l'autre contrôleur de passerelle multimédia (MGC2) en le remplaçant par le schéma de codec G.711 Redondant.

6. Procédé selon la revendication 3, dans lequel le service à faible vitesse est un service de télécopie ordinaire, et les deux passerelles multimédia appelante et appelée (MGW1, MGW2) prennent en charge le schéma de codec T.38, et les étapes consistant à transmettre la signalisation caractéristique lors de la détection de la signalisation caractéristique du service à faible vitesse, déterminer le schéma de codec, envoyer le message de transport d'application et commuter les schémas de codec des passerelles multimédia appelante et appelée (MGW1, MGW2) respectivement vers un schéma de codec G.711 Redondant ou T.3 8 comprennent :
lors de la détection de la signalisation caractéristique du service de télécopie ordinaire, transmettre, par la passerelle multimédia appelante ou appelée (MGW1), la signalisation caractéristique au contrôleur de passerelle multimédia (MGC1) correspondant à la passerelle multimédia appelante ou appelée (MGW1) ;
déterminer, par le contrôleur de passerelle multimédia (MGC1), qu'il faut commuter vers le schéma de codec T.38 après avoir déterminé que la signalisation caractéristique comprend une signalisation V21 ;
modifier, par le contrôleur de passerelle multimédia (MGC1), le schéma de codec de la passerelle multimédia (MGW1) correspondant au contrôleur de passerelle multimédia (MGC1) en le remplaçant par le schéma de codec T.38 ;
envoyer, par le contrôleur de passerelle multimédia (MGC1), le message de transport d'application à l'autre contrôleur de passerelle multimédia (MGC2) pour notifier à l'autre contrôleur de passerelle multimédia (MGC2) qu'il doit commuter vers le schéma de codec T.38 ; et
modifier, par l'autre contrôleur de passerelle multimédia (MGC2), le schéma de codec de la passerelle multimédia (MGW2) correspondant à l'autre contrôleur de passerelle multimédia (MGC2) en le remplaçant par le schéma de codec T.38.

7. Procédé selon la revendication 1, dans lequel les étapes consistant à transmettre la signalisation caractéristique, déterminer le type du service, envoyer le message de transport d'application et commuter les schémas de codec de la passerelle multimédia appelante et de la passerelle multimédia appelée (MGW1, MGW2) comprennent :
lors de la détection de la signalisation caractéristique d'un service à grande vitesse, transmettre, par la passerelle multimédia appelante ou appelée (MGW1), la signalisation caractéristique au contrôleur de passerelle multimédia (MGC1) correspondant à la passerelle multimédia appelante ou appelée (MGW1) ;
déterminer, par le contrôleur de passerelle multimédia (MGC1), un schéma de codec T.38 vers lequel commuter ;
commuter, par le contrôleur de passerelle multimédia (MGC1) de la passerelle multimédia appelante ou appelée (MGW1), le schéma de codec de la passerelle multimédia appelante ou appelée (MGW1) vers le schéma de codec T.38 par l'intermédiaire d'un échange de signalisation entre le contrôleur de passerelle multimédia (MGC1) et la passerelle multimédia appelante ou appelée (MGW1) ;
envoyer, par le contrôleur de passerelle multimédia (MGC1) de la passerelle multimédia appelante ou appelée (MGW1), le message de transport d'application à l'autre contrôleur de passerelle multimédia (MGC2) pour notifier à l'autre contrôleur de passerelle multimédia (MGC2) de commuter vers le schéma de codec déterminé ; et
commuter, par l'autre contrôleur de passerelle multimédia (MGC2), le schéma de codec de la passerelle multimédia (MGW2) correspondant à l'autre contrôleur de passerelle multimédia (MGC2) vers le schéma de codec T.38 par l'intermédiaire d'un échange de signalisation entre l'autre contrôleur de passerelle multimédia (MGC2) et la passerelle multimédia (MGW2) correspondant à l'autre contrôleur de passerelle multimédia (MGC2).

8. Procédé selon la revendication 7, dans lequel le service à grande vitesse est un service de télécopie à grande vitesse, et les deux passerelles multimédia appelante et appelée (MGW1, MGW2) prennent en charge les schémas de codec G.711 Redondant et T.38, et les étapes consistant à transmettre la signalisation caractéristique lors de la détection de la signalisation caractéristique d'un service à grande vitesse, déterminer le schéma de codec, envoyer le message de transport d'application et commuter les schémas de codec des passerelles multimédia appelante et appelée (MGW1, MGW2) respectivement vers un schéma de codec T.38 comprennent :
lors de la détection de la signalisation caractéristique du service de télécopie à grande vitesse, transmettre, par la passerelle multimédia appelante ou appelée (MGW1), la signalisation caractéristique au contrôleur de passerelle multimédia (MGC1) correspondant à la passerelle multimédia appelante ou appelée (MGW1) ;
déterminer, par le contrôleur de passerelle multimédia (MGC1), qu'il faut commuter vers le schéma de codec G.711 Redondant après avoir déterminé que la signalisation caractéristique comprend une signalisation /ANSam ou ANSam ;
modifier, par le contrôleur de passerelle multimédia (MGC1), le schéma de codec de la passerelle multimédia (MGW1) correspondant au contrôleur de passerelle multimédia (MGC1) en le remplaçant par le schéma de codec G.711 Redondant ;
envoyer, par le contrôleur de passerelle multimédia (MGC1), le message de transport d'application à l'autre contrôleur de passerelle multimédia (MGC2) pour notifier à l'autre contrôleur de passerelle multimédia (MGC2) qu'il doit commuter vers le schéma de codec G.711 Redondant ;
modifier, par l'autre contrôleur de passerelle multimédia (MGC2), le schéma de codec de la passerelle multimédia (MGW2) correspondant à l'autre contrôleur de passerelle multimédia (MGC2) en le remplaçant par le schéma de codec G.711 Redondant ; et
configurer un canal de service de télécopie avec le schéma de codec G.711 Redondant entre les passerelles multimédia appelante et appelée (MGW1, MGW2) ;
lors de la détection de la signalisation V21 ou de la télécopie CM, transmettre, par la passerelle multimédia appelante ou appelée (MGW1), la signalisation au contrôleur de passerelle multimédia (MGC1) correspondant à la passerelle multimédia appelante ou
appelée (MGW1) ;
déterminer, par le contrôleur de passerelle multimédia (MGC1), qu'il faut commuter vers le schéma de codec T.38 selon la signalisation reçue ;
modifier, par le contrôleur de passerelle multimédia (MGC1), le schéma de codec de la passerelle multimédia (MGW1) correspondant au contrôleur de passerelle multimédia (MGC1) en le remplaçant par le schéma de codec T.38 ;
envoyer, par le contrôleur de passerelle multimédia (MGC1), le message de transport d'application à l'autre contrôleur de passerelle multimédia (MGC2) pour notifier à l'autre contrôleur de passerelle multimédia (MGC2) qu'il doit commuter vers le schéma de codec T.3 8 ; et
modifier, par l'autre contrôleur de passerelle multimédia (MGC2), le schéma de codec de la passerelle multimédia (MGW2) correspondant à l'autre contrôleur de passerelle multimédia (MGC2) en le remplaçant par le schéma de codec T.38.

9. Procédé selon la revendication 7, dans lequel le service à grande vitesse est un service de modem à grande vitesse, et les deux passerelles multimédia appelante et appelée (MGW1, MGW2) prennent en charge les schémas de codec G.711 Redondant et T.38, et les étapes consistant à transmettre la signalisation caractéristique lors de la détection de la signalisation caractéristique d'un service à grande vitesse, déterminer le schéma de codec, envoyer le message de transport d'application et commuter les schémas de codec des passerelles multimédia appelante et appelée (MGW1, MGW2) respectivement vers un schéma de codec T.38 comprennent :
lors de la détection de la signalisation caractéristique du service de modem à grande vitesse, transmettre, par la passerelle multimédia appelante ou appelée (MGW1), la signalisation caractéristique au contrôleur de passerelle multimédia (MGC1) correspondant à la passerelle multimédia appelante ou appelée (MGW1) ;
déterminer, par le contrôleur de passerelle multimédia (MGC1), qu'il faut commuter vers le schéma de codec G.711 Redondant après avoir déterminé que la signalisation caractéristique comprend une signalisation /ANSam ou ANSam ;
modifier, par le contrôleur de passerelle multimédia (MGC1), le schéma de codec de la passerelle multimédia (MGW1) correspondant au contrôleur de passerelle multimédia (MGC1) en le remplaçant par le schéma de codec G.711 Redondant ;
envoyer, par le contrôleur de passerelle multimédia (MGC1), le message de transport d'application à l'autre contrôleur de passerelle multimédia (MGC2) pour notifier à l'autre contrôleur de passerelle multimédia (MGC2) qu'il doit commuter vers le schéma de codec G.711 Redondant ;
modifier, par l'autre contrôleur de passerelle multimédia (MGC2), le schéma de codec de la passerelle multimédia (MGW2) correspondant à l'autre contrôleur de passerelle multimédia (MGC2) en le remplaçant par le schéma de codec G.711 Redondant ; et
configurer un canal de service de modem avec le schéma de codec G.711 Redondant entre les passerelles multimédia appelante et appelée (MGW1, MGW2) ;
lors de la détection de la signalisation de modem CM, transmettre, par la passerelle multimédia appelante ou appelée (MGW1), la signalisation au contrôleur de passerelle multimédia (MGC1) correspondant à la passerelle multimédia appelante ou appelée (MGW1) ;
déterminer, par le contrôleur de passerelle multimédia (MGC1), qu'il faut commuter vers le schéma de codec T. 3 8 selon la signalisation reçue ;
modifier, par le contrôleur de passerelle multimédia (MGC1), le schéma de codec de la passerelle multimédia (MGW1) correspondant au contrôleur de passerelle multimédia (MGC1) en le remplaçant par le schéma de codec T. 3 8 ;
envoyer, par le contrôleur de passerelle multimédia (MGC1), le message de transport d'application à l'autre contrôleur de passerelle multimédia (MGC2) pour notifier à l'autre contrôleur de passerelle multimédia (MGC2) qu'il doit commuter vers le schéma de codec T.38 ; et
modifier, par l'autre contrôleur de passerelle multimédia (MGC2), le schéma de codec de la passerelle multimédia (MGW2) correspondant à l'autre contrôleur de passerelle multimédia (MGC2) en le remplaçant par le schéma de codec T.38.

10. Procédé selon l'une quelconque des revendications 3 et 6 à 9 dans lequel, après l'étape consistant à exécuter le type correspondant de transport de service, le procédé comprend en outre :
détecter, par la passerelle multimédia appelante ou appelée (MGW1, MGW2), une fin du transport de service, et transmettre une signalisation caractéristique de fin de télécopie au contrôleur de passerelle multimédia (MGC1, MGC2) correspondant à la passerelle multimédia appelante ou appelée (MGW1, MGW2) ;
déterminer, par le contrôleur de passerelle multimédia (MGC1, MGC2) qu'il faut actuellement retourner vers le schéma de codec original selon la signalisation caractéristique de fin de télécopie ;
modifier, par le contrôleur de passerelle multimédia (MGC1, MGC2), le schéma de codec de la passerelle multimédia (MGW1, MGW2) correspondant au contrôleur de passerelle multimédia (MGC1, MGC2) en le remplaçant par le schéma de codec original ; et envoyer, par le contrôleur de passerelle multimédia (MGC1, MGC2), un message de transport d'application à l'autre contrôleur de passerelle multimédia (MGC2, MGC1) pour notifier à l'autre contrôleur de passerelle multimédia (MGC2, MGC1) qu'il doit commuter vers le schéma de codec original ; et modifier, par l'autre contrôleur de passerelle multimédia (MGC2, MGC1), le schéma de codec de la passerelle multimédia (MGW2, MGW1) correspondant à l'autre contrôleur de passerelle multimédia (MGC2, MGC1) en le remplaçant par le schéma de codec original.

11. Procédé selon l'une quelconque des revendications 1 à 9, comprenant en outre :
lors de la détection de la signalisation caractéristique du service, transférer, par la passerelle multimédia appelante ou par la passerelle multimédia appelée (MGW1), la signalisation caractéristique du service dans un plan de support avec un transport sans perte, ou transférer la signalisation caractéristique du service hors bande d'une façon étendu.

12. Procédé selon la revendication 1, dans lequel l'étape consistant à négocier et à déterminer le schéma de codec pris en charge par les deux parties appelante et appelée comprend :
envoyer, par le contrôleur de passerelle multimédia appelant (MGC1, MGC2), les schémas de codec pris en charge par la partie appelante au contrôleur de passerelle multimédia appelé (MGC2, MGC1) ;
sélectionner, par le contrôleur de passerelle multimédia appelé (MGC2, MGC1), à partir des schémas de codec pris en charge par la partie appelante un schéma de codec pris en charge par la partie appelée, et retourner le schéma de codec au contrôleur de passerelle multimédia appelant (MGC1, MGC2) comme le schéma de codec pris en charge par les deux parties appelante et appelée.

13. Procédé selon la revendication 4, 5, 6, 8 ou 9, dans lequel l'étape consistant à transmettre la signalisation caractéristique au contrôleur de passerelle multimédia (MGC1) correspondant comprend :
transmettre la signalisation caractéristique au contrôleur de passerelle multimédia (MGC1) par l'intermédiaire d'un message Notify.

14. Procédé selon la revendication 4, 5, 6, 8 ou 9, dans lequel l'étape consistant à modifier par le contrôleur de passerelle multimédia (MGC1, MGC2) un schéma de codec de la passerelle multimédia (MGW1, MGW2) correspondant au contrôleur de passerelle multimédia (MGC1, MGC2) comprend :
envoyer, par le contrôleur de passerelle multimédia (MGC1, MGC2), à la passerelle multimédia (MGW1, MGW2) un message Modify contenant le schéma de codec vers lequel commuter, et lors de la réception du message Modify, modifier, par la passerelle multimédia (MGW1, MGW2), son schéma de codec en le remplaçant par le schéma de codec contenu dans le message Modify.
